# EUROPEAN PATENT SPECIFICATION

(11) **EP 3 895 476 B1**
(45) Date of publication and mention of the grant of the patent: **10.12.2025**
(21) Application number: 19895455.4
(22) Date of filing: 13.12.2019
(51) Int. Cl.: H04W 48/10, H04W 16/26, H04W 92/20, H04W 48/06, H04W 48/12, H04W 88/04

(54) **METHODS AND APPARATUS FOR CELL BARRING IN WIRELESS RELAY NETWORKS**
VERFAHREN UND VORRICHTUNG ZUR ZELLENSPERRE IN DRAHTLOSEN RELAISNETZWERKEN
PROCÉDÉ ET APPAREIL D'INTERDICTION DE CELLULE DANS DES RÉSEAUX DE RELAIS SANS FIL

(30) Priority: 14.12.2018 US 201862780068 P
(43) Date of publication of application: 20.10.2021
(73) Proprietor: Sharp Kabushiki Kaisha, Sakai City, Osaka 590-8522 (JP)
(72) Inventor: ISHII, Atsushi, Vancouver, WA 98683 (US)
(74) Representative: Müller-Boré & Partner Patentanwälte PartG mbB
(86) International application number: PCT/JP2019/049029
(87) International publication number: WO 2020/122247

(56) References cited:
- US-A1- 2017 366 999
- US-A1- 2018 279 205
- ERICSSON ET AL: "Cell suitability and cell reselection", vol. RAN WG2, no. Gothenburg, Sweden; 20180820 - 20180824, 10 August 2018 (2018-08-10), XP051521884, Retrieved from the Internet <URL:http://www.3gpp.org/ftp/tsg%5Fran/WG2%5FRL2/TSGR2%5F103/Docs/R2%2D1812277%2Ezip> [retrieved on 20180810]
- SHARP: "Access restrictions (barring) in IAB", vol. RAN WG2, no. Chongqing, China; 20191014 - 20191018, 4 October 2019 (2019-10-04), XP051791659, Retrieved from the Internet <URL:http://www.3gpp.org/ftp/tsg_ran/WG2_RL2/TSGR2_107bis/Docs/R2-1913666.zip> [retrieved on 20191004]
- INTEL CORPORATION: "PHY layer enhancements for NR IAB", vol. RAN WG1, 11 August 2018 (2018-08-11), pages 1 - 13, XP051516066, Retrieved from the Internet <URL:http://www.3gpp.org/ftp/tsg%5Fran/WG1%5FRL1/TSGR1%5F94/Docs/R1%2D1808691%2Ezip> [retrieved on 20180811]
- INTEL CORPORATION: "PHY layer enhancements for NR IAB", 3GPP DRAFT; R1-1808691, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, R1-1808691, 11 August 2018 (2018-08-11), Mobile Competence Centre ; 650, route des Lucioles ; F-06921 Sophia-Antipolis Cedex ; France, pages 1 - 13, XP051516066
- SHARP: "Access restrictions (barring) in IAB", 3GPP DRAFT; R2-1913666, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chongqing, China; 20191014 - 20191018, R2-1913666, 4 October 2019 (2019-10-04), Mobile Competence Centre ; 650, route des Lucioles ; F-06921 Sophia-Antipolis Cedex ; France, XP051791659

## Description

### Technical Field

The technology relates to wireless communications, and particularly to a wireless access node of a radio access network (RAN), an Integrated Access and Backhaul (IAB) node of a RAN, and a method for a wireless access node of a RAN.

### Background Art

A radio access network typically resides between wireless devices, such as user equipment (UEs), mobile phones, mobile stations, or any other device having wireless termination, and a core network. Example of radio access network types includes the GRAN, GSM radio access network; the GERAN, which includes EDGE packet radio services; UTRAN, the UMTS radio access network; E-UTRAN, which includes Long-Term Evolution; and g-UTRAN, the New Radio (NR).

A radio access network may comprise one or more access nodes, such as base station nodes, which facilitate wireless communication or otherwise provides an interface between a wireless terminal and a telecommunications system. A non-limiting example of a base station can include, depending on radio access technology type, a Node B ("NB"), an enhanced Node B ("eNB"), a home eNB ("HeNB"), a gNB (for a New Radio ["NR"] technology system), or some other similar terminology.

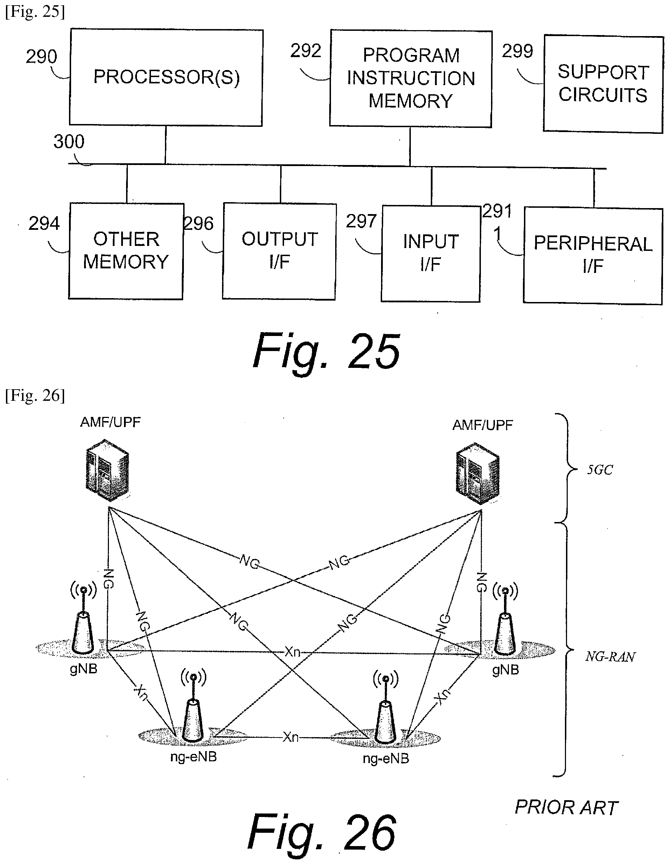

The 3rd Generation Partnership Project ("3GPP") is a group that, e.g., develops collaboration agreements such as 3GPP standards that aim to define globally applicable technical specifications and technical reports for wireless communication systems. Various 3GPP documents may describe certain aspects of radio access networks. Overall architecture for a fifth generation system, e.g., the 5G System, also called "NR" or "New Radio", as well as "NG" or "Next Generation", is shown in Fig. 26, and is also described in 3GPP TS 38.300. The 5G NR network is comprised of NG RAN (Next Generation Radio Access Network) and 5GC (5G Core Network). As shown, NGRAN is comprised of gNBs (e.g., 5G Base stations) and ng-eNBs (i.e. LTE base stations). An Xn interface exists between gNB-gNB, between (gNB)-(ng-eNB) and between (ng-eNB)-(ng-eNB). The Xn is the network interface between NG-RAN nodes. Xn-U stands for Xn User Plane interface and Xn-C stands for Xn Control Plane interface. ANG interface exists between 5GC and the base stations (i.e. gNB & ng-eNB). A gNB node provides NR user plane and control plane protocol terminations towards the UE, and is connected via the NG interface to the 5GC. The 5G NR (New Radio) gNB is connected to AMF (Access and Mobility Management Function) and UPF (User Plane Function) in 5GC (5G Core Network).

In some cellular mobile communication systems and networks, such as Long-Term Evolution (LTE) and New Radio (NR), a service area is covered by one or more base stations, where each of such base stations may be connected to a core network by fixed-line backhaul links (e.g., optical fiber cables). In some instances, due to weak signals from the base station at the edge of the service area, users tend to experience performance issues, such as: reduced data rates, high probability of link failures, etc. A relay node concept has been introduced to expand the coverage area and increase the signal quality. As implemented, the relay node may be connected to the base station using a wireless backhaul link.

In 3rd Generation Partnership Project (3GPP), the relay node concept for the fifth generation (5G) cellular system has been discussed and standardized, where the relay nodes may utilize the same 5G radio access technologies (e.g., New Radio (NR)) for the operation of services to User Equipment (UE) (access link) and connections to the core network (backhaul link) simultaneously. These radio links may be multiplexed in time, frequency, and/or space. This system may be referred to as Integrated Access and Backhaul (IAB).

Some such cellular mobile communication systems and networks may comprise IAB-donors and IAB-nodes, where an IAB-donor may provide interface to a core network to UEs and wireless backhauling functionality to IAB-nodes; and additionally, an IAB-node may provide IAB functionality combined with wireless self-backhauling capabilities. IAB-nodes may need to periodically perform inter-IAB-node discovery to detect new IAB-nodes in their vicinity based on cell-specific reference signals (e.g., Synchronization Signal and PBCH block SSB). The cell-specific reference signals may be broadcasted on a Physical Broadcast Channel (PBCH) where packets may be carried or broadcasted on the Master Information Block (MIB) section.

A node in an IAB-based relay network may utilize resources provided by other nodes. It is expected that in some circumstances a portion of the relay network may get congested and therefore some nodes may desire to control use of their resources from others. What is needed, therefore, are apparatus, methods and procedures to handle such a congestion via access restrictions, e.g., access barring or cell barring.

Moreover, an IAB-based relay network may use broadcast signals to convey essential information.

Ericsson et al., "Cell suitability and cell reselection", 3GPP TSG-RAN2 Meeting #103, Gothenburg, Sweden, 20 to 24 August 2018, 3GPP Draft R2-1812277, discusses cell suitability and cell reselection in NR, observing that the UE performs neighbour cell measurements and evaluates detected cells for potential cell re-selection based on the system information acquired from the serving cell, an that the UE acquires MIB and SIB1 of the target cell to check the cell suitability of the target cell during cell reselection before the UE camps on the cell.

US 2018/0279205 describes a relay apparatus for relaying radio communication between one or more terminal devices and a macro cell base station, wherein when the relay apparatus *receives* a cell restriction instruction from the macro cell base station to restrict a quantity of terminals capable of existing in a service area of a cell formed by the macro cell base station, the relay apparatus executes processing for avoiding cell restriction operation on itself and transfers the cell restriction instruction received from the macro cell base station to the terminal devices existing in a service area of a cell formed by the relay apparatus itself.

Sharp, "Access restrictions (barring) in IAB", 3GPP TSG RAN WG2 Meeting #107bis, Chongqing, China, 14 to 18 October 2019, 3GPP Draft R2-1913666, discusses to support selective access restriction to restrict UEs from camping on a cell while allowing IAB-node MTs to camp on, proposing that IAB nodes should ignore the legacy *cellBarred* in MIB, proposing to support selective access restriction to restrict IAB node MTs from camping on a cell while allowing UEs to camp on.

Intel Corporation, "PHY layer enhancements for NR IAB", 3GPP TSG RAN WG1 #94, 20 to 24 August 2018, Gothenburg, Sweden, 3GPP Draft R1-1808691, discusses aspects on PHY layer enhancements for NR IAB, in particular regarding IAB node discovery and RRM, TA-based synchronization, PRACH for access and backhaul links, resource allocation and scheduling, cross-link interference management.

What is also needed, therefore, are apparatus, methods, and procedures to notify nodes and terminals of an IAB-based relay network when some contents of the essential information change.

### Summary of Invention

The above and other objects are achieved by a wireless access node of a radio access network (RAN), an Integrated Access and Backhaul (IAB) node of a RAN, and a method for a wireless access node of a RAN, as defined in the claims, respectively.

### Brief Description of Drawings

The foregoing and other objects, features, and advantages of the technology disclosed herein will be apparent from the following more particular description of preferred embodiments as illustrated in the accompanying drawings in which reference characters refer to the same parts throughout the various views. The drawings are not necessarily to scale, emphasis instead being placed upon illustrating the principles of the technology disclosed herein.
Fig. 1, provided for illustrative purposes for better understanding of the claimed invention, is a diagrammatic view illustrating a mobile network infrastructure using 5G signals and 5G base stations.
Fig. 2, provided for illustrative purposes for better understanding of the claimed invention, is a diagrammatic view depicting an example of functional block diagrams for the IAB-donor and the IAB-node.
Fig. 3, provided for illustrative purposes for better understanding of the claimed invention, is a diagrammatic view illustrating Control Plane (C-Plane) and User Plane (U-Plane) protocols among the UE, IAB-nodes, and IAB-donor.
Fig. 4, provided for illustrative purposes for better understanding of the claimed invention, is a functional block diagram of an example protocol stack configuration for the U-Plane.
Fig. 5A, provided for illustrative purposes for better understanding of the claimed invention, depicts a functional block diagram of an example protocol stack configuration for the C-Plane between an IAB-node connected to an IAB-donor.
Fig. 5B, provided for illustrative purposes for better understanding of the claimed invention, depicts a functional block diagram of an example configuration of the C-Plane protocol stack for an IAB-node connected to another IAB-node which is connected to an IAB-donor.
Fig. 5C, provided for illustrative purposes for better understanding of the claimed invention, depicts a functional block diagram of an example configuration of the C-Plane protocol stack for a UE's RRC signaling.
Fig. 6A, provided for illustrative purposes for better understanding of the claimed invention, depicts an example message sequence for an IAB-node to establish an RRC connection, followed by F1-AP* connection.
Fig. 6B, provided for illustrative purposes for better understanding of the claimed invention, depicts an example message sequence for IAB-node to establish an RRC connection with an IAB-donor, followed by the F1 setup procedure.
Fig. 7, provided for illustrative purposes for better understanding of the claimed invention, is a diagrammatic view illustrating an example of a radio protocol architecture for the control and user planes in a mobile communications network.
Fig. 8, provided for illustrative purposes for better understanding of the claimed invention, is a schematic view showing a parent IAB node which transmits a cell barring information message in a wireless relay network which comprises an IAB-relay node and a user equipment.
Fig. 9, provided for illustrative purposes for better understanding of the claimed invention, is a schematic view of a wireless relay network which in which an IAB-relay node and a user equipment may execute a same or standard barring procedure.
Fig. 10, provided for illustrative purposes for better understanding of the claimed invention, is a schematic view of a wireless relay network comprising a parent node, an IAB-relay node, and user equipment and in which cell barring information may be included in system information.
Fig. 11 is a diagrammatic view showing the invention in which the cell barring information is transmitted in one or more system information blocks and in which an information element such as CellBarredIAB may be included.
Fig. 12, provided for illustrative purposes for better understanding of the claimed invention, is a flowchart showing example, basic, representative steps or acts performed by a parent node of Fig. 10.
Fig. 13, provided for illustrative purposes for better understanding of the claimed invention, is a flowchart showing example, basic, representative steps or acts performed by a wireless terminal of Fig. 10.
Fig. 14 is a diagrammatic view showing the invention in which the cell barring information is transmitted in one or more system information blocks and in which an information element such as CellIABSupport may be included.
Fig. 15 is a diagrammatic view showing an example embodiment and mode according to the invention in which the cell barring information is transmitted in one or more system information blocks and in which an information element such as cellReservedForlABUse may be included.
Fig. 16, provided for illustrative purposes for better understanding of the claimed invention, is a schematic view of a wireless relay network which in which an IAB-relay node and a user equipment may execute different standard barring procedures.
Fig. 17, provided for illustrative purposes for better understanding of the claimed invention, is a schematic view of a wireless relay network which in which cell barring information may include a field indicating whether the cell supports relaying functionality required by a wireless terminal.
Fig. 18, provided for illustrative purposes for better understanding of the claimed invention, is a schematic view of a wireless relay network which in an access node does not send out a system information change notification when changed system information involves system information dedicated to an IAB relay type node.
Fig. 19, provided for illustrative purposes for better understanding of the claimed invention, is a flowchart showing example, basic, representative steps or acts performed by a parent node of Fig. 18.
Fig. 20, provided for illustrative purposes for better understanding of the claimed invention, is a schematic view of a wireless relay network which in an access node may include in a system information change notification a designated information element which may be used to notify a change in the system information relevant to a specific type of terminal.
Fig. 21, provided for illustrative purposes for better understanding of the claimed invention, is a flowchart showing example, basic, representative steps or acts performed by a parent node of Fig. 20.
Fig. 22, provided for illustrative purposes for better understanding of the claimed invention, is a schematic view of a wireless relay network which in an access node may include in system information change notification including both a first system information change notification and a second system information change notification.
Fig. 23, provided for illustrative purposes for better understanding of the claimed invention, is a flowchart showing example, basic, representative steps or acts performed by a parent node of Fig. 22.
Fig. 24, provided for illustrative purposes for better understanding of the claimed invention, is a flowchart showing example, basic, representative steps or acts performed by a wireless terminal of Fig. 22.
Fig. 25, provided for illustrative purposes for better understanding of the claimed invention, is a diagrammatic view showing example elements comprising electronic machinery which may comprise a wireless terminal, a radio access node, and a core network node according to an example embodiment and mode.
Fig. 26, provided for illustrative purposes for better understanding of the claimed invention, is a diagrammatic view of overall architecture for a 5G New Radio system.

### Description of Embodiments

The invention is according to embodiment 2, in particular according to embodiment 2-1 and 2-2. Apparatus, methods and procedures are provided to handle congestion via access restrictions, e.g., access barring or cell barring, in a wireless relay network.

Apparatus, methods, and procedures are also provided to notify nodes and terminals of an IAB-based relay network when some contents of the essential information change.

In the following description, for purposes of explanation and not limitation, specific details are set forth such as particular architectures, interfaces, techniques, etc. in order to provide a thorough understanding of the technology disclosed herein. However, it will be apparent to those skilled in the art that the technology disclosed herein may be practiced in other embodiments that depart from these specific details. That is, those skilled in the art will be able to devise various arrangements. In some instances, detailed descriptions of well-known devices, circuits, and methods are omitted so as not to obscure the description of the technology disclosed herein with unnecessary detail. All statements herein reciting principles, aspects, and embodiments of the technology disclosed herein, as well as specific examples thereof, are intended to encompass both structural and functional equivalents thereof.

Thus, for example, it will be appreciated by those skilled in the art that block diagrams herein can represent conceptual views of illustrative circuitry or other functional units embodying the principles of the technology. Similarly, it will be appreciated that any flow charts, state transition diagrams, pseudo code, and the like represent various processes which may be substantially represented in computer readable medium and so executed by a computer or processor, whether or not such computer or processor is explicitly shown.

As used herein, the term "core network" can refer to a device, group of devices, or subsystem in a telecommunication network that provides services to users of the telecommunications network. Examples of services provided by a core network include aggregation, authentication, call switching, service invocation, gateways to other networks, etc.

As used herein, the term "wireless terminal" can refer to any electronic device used to communicate voice and/or data via a telecommunications system, such as (but not limited to) a cellular network. Other terminology used to refer to wireless terminals and non-limiting examples of such devices can include user equipment terminal, UE, mobile station, mobile device, access terminal, subscriber station, mobile terminal, remote station, user terminal, terminal, subscriber unit, cellular phones, smart phones, personal digital assistants ("PDAs"), laptop computers, tablets, netbooks, e-readers, wireless modems, etc.

As used herein, the term "access node", "node", or "base station" can refer to any device or group of devices that facilitates wireless communication or otherwise provides an interface between a wireless terminal and a telecommunications system. A non-limiting example of a base station can include, in the 3GPP specification, a Node B ("NB"), an enhanced Node B ("eNB"), a home eNB ("HeNB"), a gNB (for a New Radio ["NR"] technology system), or some other similar terminology.

As used herein, the term "telecommunication system" or "communications system" can refer to any network of devices used to transmit information. A non-limiting example of a telecommunication system is a cellular network or other wireless communication system.

As used herein, the term "cellular network" or "cellular radio access network" can refer to a network distributed over cells, each cell served by at least one fixed-location transceiver, such as a base station. A "cell" may be any communication channel that is specified by standardization or regulatory bodies to be used for International Mobile Telecommunications-Advanced ("IMTAdvanced"). All or a subset of the cell may be adopted by 3GPP as licensed bands (e.g., frequency band) to be used for communication between a base station, such as a Node B, and a UE terminal. A cellular network using licensed frequency bands can include configured cells. Configured cells can include cells of which a UE terminal is aware and in which it is allowed by a base station to transmit or receive information. Examples of cellular radio access networks include E-UTRAN, and any successors thereof (e.g., NUTRAN).

Any reference to a "resource" herein means "radio resource" unless otherwise clear from the context that another meaning is intended. In general, as used herein a radio resource ("resource") is a time-frequency unit that can carry information across a radio interface, e.g., either signal information or data information. An example of a radio resource occurs in the context of a "frame" of information that is typically formatted and prepared, e.g., by a node. In Long Term Evolution (LTE) a frame, which may have both downlink portion(s) and uplink portion(s), is communicated between the base station and the wireless terminal. Each LTE frame may comprise plural subframes. For example, in the time domain, a 10 ms frame consists of ten one millisecond subframes. An LTE subframe is divided into two slots (so that there are thus 20 slots in a frame). The transmitted signal in each slot is described by a resource grid comprised of resource elements (RE). Each column of the two dimensional grid represents a symbol (e.g., an OFDM symbol on downlink (DL) from node to wireless terminal; an SC-FDMA symbol in an uplink (UL) frame from wireless terminal to node). Each row of the grid represents a subcarrier. A resource element (RE) is the smallest time-frequency unit for downlink transmission in the subframe. That is, one symbol on one sub-carrier in the sub-frame comprises a resource element (RE) which is uniquely defined by an index pair (k,l) in a slot (where k and l are the indices in the frequency and time domain, respectively). In other words, one symbol on one sub-carrier is a resource element (RE). Each symbol comprises a number of sub-carriers in the frequency domain, depending on the channel bandwidth and configuration. The smallest time-frequency resource supported by the standard today is a set of plural sub-carriers and plural symbols (e.g., plural resource elements (RE)) and is called a resource block (RB). A resource block may comprise, for example, 84 resource elements, i.e., 12 subcarriers and 7 symbols, in case of normal cyclic prefix

A mobile network used in wireless networks may be where the source and destination are interconnected by way of a plurality of nodes. In such a network, the source and destination may not be able to communicate with each other directly due to the distance between the source and destination being greater than the transmission range of the nodes. That is, a need exists for intermediate node(s) to relay communications and provide transmission of information. Accordingly, intermediate node(s) may be used to relay information signals in a relay network, having a network topology where the source and destination are interconnected by means of such intermediate nodes. In a hierarchical telecommunications network, the backhaul portion of the network may comprise the intermediate links between the core network and the small subnetworks of the entire hierarchical network. Integrated Access and Backhaul (IAB) Next generation NodeB use 5G New Radio communications such as transmitting and receiving NR User Plane (U-Plane) data traffic and NR Control Plane (C-Plane) data. Both, the UE and gNB may include addressable memory in electronic communication with a processor. In one embodiment, instructions may be stored in the memory and are executable to process received packets and/or transmit packets according to different protocols, for example, Medium Access Control (MAC) Protocol and/or Radio Link Control (RLC) Protocol.

In some aspects of the embodiments for handling of radio link failures in wireless relay networks, disclosed is a Mobile Termination (MT) functionality-typically provided by the User Equipment (UE) terminals-that may be implemented by Base Transceiver Stations (BTSs or BSs) nodes, for example, IAB nodes. In one embodiment, the MT functions may comprise common functions such as: radio transmission and reception, encoding and decoding, error detection and correction, signaling, and access to a SIM.

In a mobile network, an IAB child node may use the same initial access procedure (discovery) as an access UE to establish a connection with an IAB node/donor or parent-thereby attaching to the network or camping on a cell. In one embodiment, Radio Resource Control (RRC) protocol may be used for signaling between 5G radio network and UE, where RRC may have at least two states (e.g., RRC_IDLE and RRC_CONNECTED) and state transitions. The RRC sublayer may enable establishing of connections based on the broadcasted system information and may also include a security procedure. The U-Plane may comprise of PHY, MAC, RLC and PDCP layers.

Embodiments of the present system disclose methods and devices for an IAB-node to inform child nodes and/or UEs of upstream radio conditions and accordingly, the term IAB-node may be used to represent either a parent IAB-node or a child IAB-node, depending on where the IAB-node is in the network communication with the IAB-donor which is responsible for the physical connection with the core network. Embodiments are disclosed where an IAB-node (child IAB-node) may follow the same initial access procedure as a UE, including cell search, system information acquisition, and random access, in order to initially set up a connection to a parent IAB-node or an IAB-donor. That is, when an IAB base station (eNB/gNB) needs to establish a backhaul connection to, or camp on, a parent IAB-node or an IAB-donor, the IAB-node may perform the same procedures and steps as a UE, where the IAB-node may be treated as a UE but distinguished from a UE by the parent IAB-node or the IAB-donor.

In the disclosed embodiments for handling radio link failures in wireless relay networks, MT functionality-typically offered by a UE-may be implemented on an IAB-node. In some examples of the disclosed systems, methods, and device embodiments, consideration may be made in order for a child IAB-node to monitor a radio condition on a radio link to a parent IAB-node-where the parent IAB-node may itself be a child IAB-node in communication with an IAB-donor.

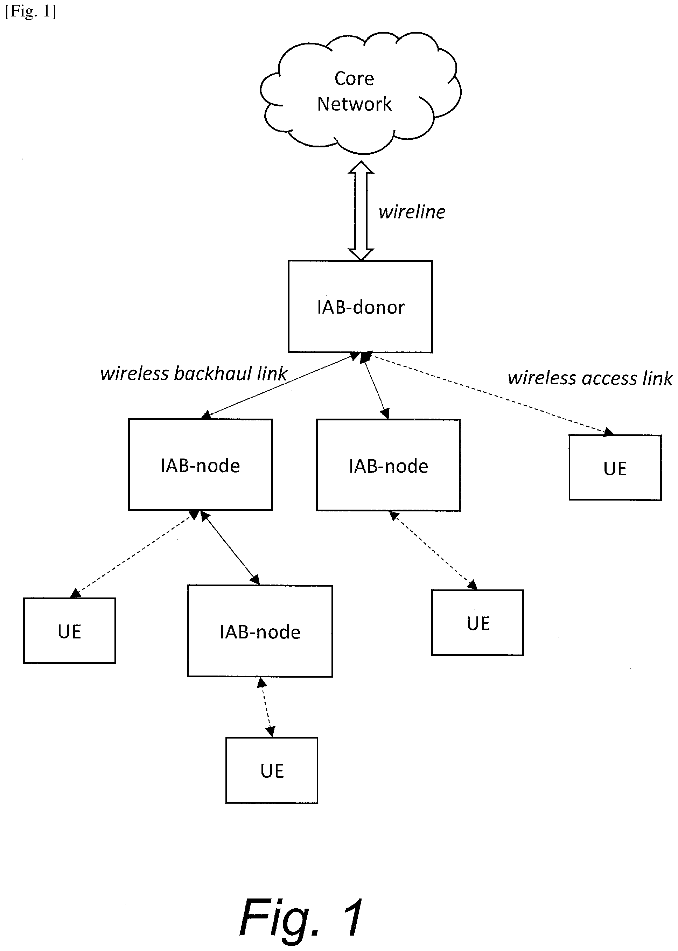

With reference to Fig. 1, the present embodiments include a mobile network infrastructure using 5G signals and 5G base stations (or cell stations). Depicted is a system diagram of a radio access network utilizing IAB nodes, where the radio access network may comprise, for example, one IAB-donor and multiple IAB-nodes. Different embodiments may comprise different number of IAB-donor and IAB-node ratios. Herein, the IAB nodes may be referred to as IAB relay nodes. The IAB-node may be a Radio Access Network (RAN) node that supports wireless access to UEs and wirelessly backhauls the access traffic. The IAB-donor may be a RAN node which may provide an interface to the core network to UEs and wireless backhauling functionality to IAB nodes. An IAB-node/donor may serve one or more IAB nodes using wireless backhaul links as well as UEs using wireless access links simultaneously. Accordingly, network backhaul traffic conditions may be implemented based on the wireless communication system to a plurality of IAB nodes and UEs.

With further reference to Fig. 1, a number of UEs are depicted as in communication with IAB nodes, for example, IAB nodes and IAB donor node, via wireless access link. Additionally, the IAB-nodes (child nodes) may be in communication with other IAB-nodes and/or an IAB-donor (all of which may be considered IAB parent nodes) via wireless backhaul link. For example, a UE may be connected to an IAB-node which itself may be connected to a parent IAB-node in communication with an IAB-donor, thereby extending the backhaul resources to allow for the transmission of backhaul traffic within the network and between parent and child for integrated access. The embodiments of the system provide for capabilities needed to use the broadcast channel for carrying information bit(s) (on the physical channels) and provide access to the core network.

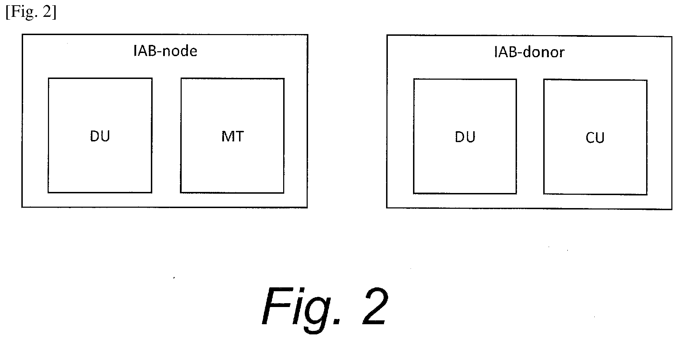

Fig. 2 depicts an example of functional block diagrams for the IAB-donor and the IAB-node (see Fig. 1). The IAB-donor may comprise at least one Central Unit (CU) and at least one Distributed Unit (DU). The CU is a logical entity managing the DU collocated in the IAB-donor as well as the remote DUs resident in the IAB-nodes. The CU may also be an interface to the core network, behaving as a RAN base station (e.g., eNB or gNB). In some embodiments, the DU is a logical entity hosting a radio interface (backhaul/access) for other child IAB-nodes and/or UEs. In one configuration, under the control of CU, the DU may offer a physical layer and Layer-2 (L2) protocols (e.g., Medium Access Control (MAC), Radio Link Control (RLC), etc.) while the CU may manage upper layer protocols (such as Packet Data Convergence Protocol (PDCP), Radio Resource Control (RRC), etc.). An IAB-node may comprise DU and Mobile-Termination (MT) functions, where in some embodiments the DU may have the same functionality as the DU in the IAB-donor, whereas MT may be a UE-like function that terminates the radio interface layers. As an example, the MT may function to perform at least one of: radio transmission and reception, encoding and decoding, error detection and correction, signaling, and access to a SIM.

Embodiments include a mobile network infrastructure where a number of UEs are connected to a set of IAB-nodes and the IAB-nodes are in communication with each other for relay and/or an IAB-donor using the different aspects of the present embodiments. In some embodiments, the UE may communicate with the CU of the IAB-donor on the C-Plane using RRC protocol and in other embodiments, using Service Data Adaptation Protocol (SDAP) and/or Packet Data Convergence Protocol (PDCP) radio protocol architecture for data transport (U-Plane) through NR gNB. In some embodiments, the DU of the IAB-node may communicate with the CU of the IAB-donor using 5G radio network layer signaling protocol: F1 Application Protocol (F1-AP*) which is a wireless backhaul protocol that provides signaling services between the DU of an IAB-node and the CU of an IAB-donor. That is, as further described below, the protocol stack configuration may be interchangeable, and different mechanism may be used.

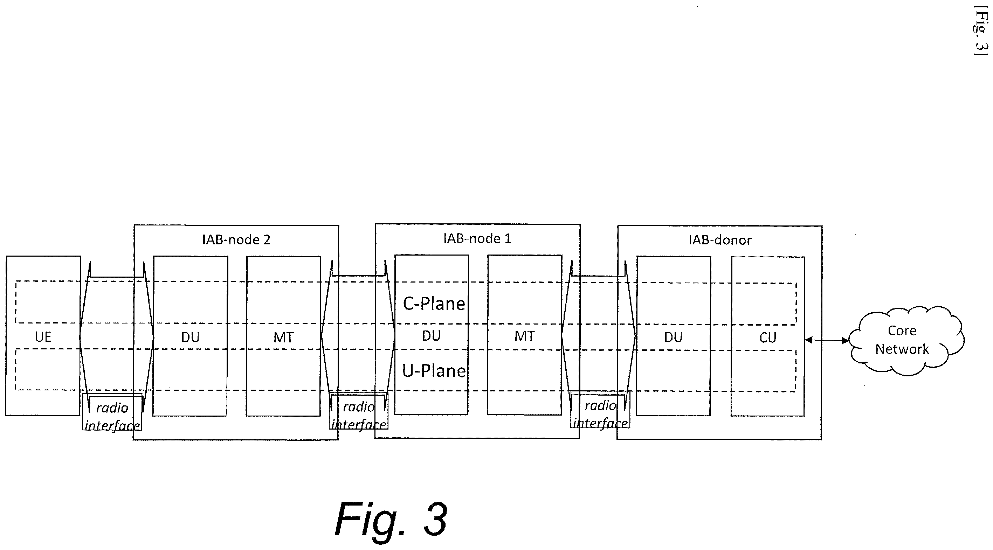

As illustrated by the diagram shown in Fig. 3, the protocols among the UE, IAB-nodes, and IAB donor are grouped into Control Plane (C-Plane) and User Plane (U-Plane). C-Plane carries control signals (signaling data), whereas the U-Plane carries user data. Fig. 3 shows an example of the embodiment where there are two IAB-nodes, IAB-node 1 and IAB-node 2, between the UE and the IAB-donor (two hops). Other embodiments may comprise a network with a single hop or multiple hops where there may be more than two IAB-nodes present.

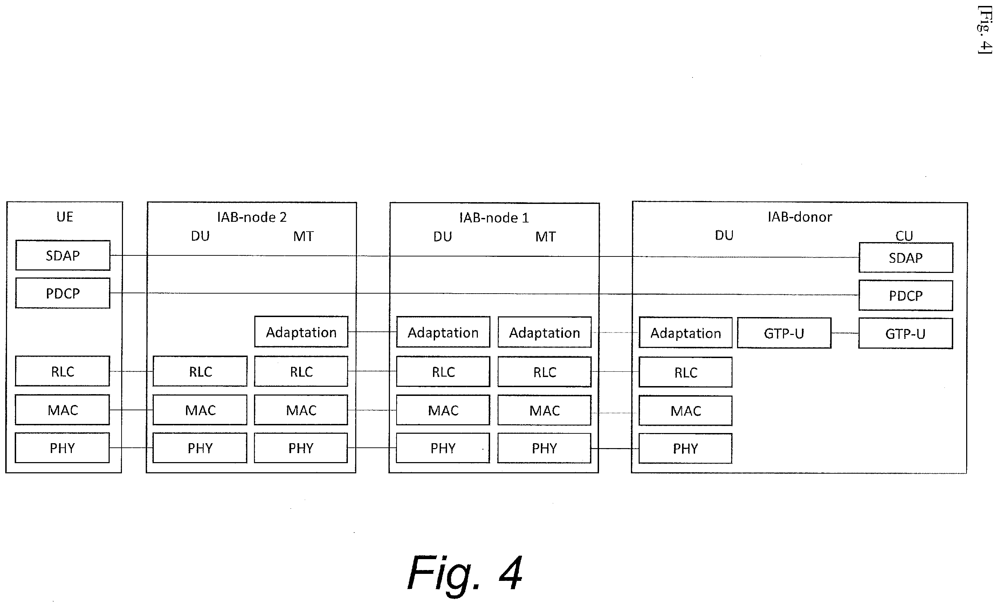

Fig. 4 depicts a functional block diagram of an example protocol stack configuration for the U-Plane, the stack comprising Service Data Protocol (e.g., SDAP, 3GPP TS 38.324) which may carry user data (e.g., via IP packets). In one embodiment, the SDAP runs on top of PDCP (3GPP TS 38.323) and the L2/Physical layers. In one embodiment, an Adaptation Layer (e.g. Backhaul Adaptation Protocol, BAP) is introduced between the IAB-node and the IAB-node/donor, where the Adaptation Layer carries relay-specific information, such as IAB-node/donor addresses, QoS information, UE identifiers, and potentially other information. In this embodiment, RLC (3GPP TS 38.322) may provide reliable transmission in a hop-by-hop manner while PDCP may perform end-to-end (UE-CU) error recovery. GTP-U (GPRS Tunneling Protocol User Plane) may be used for routing user data between CU and DU inside the IAB-donor.

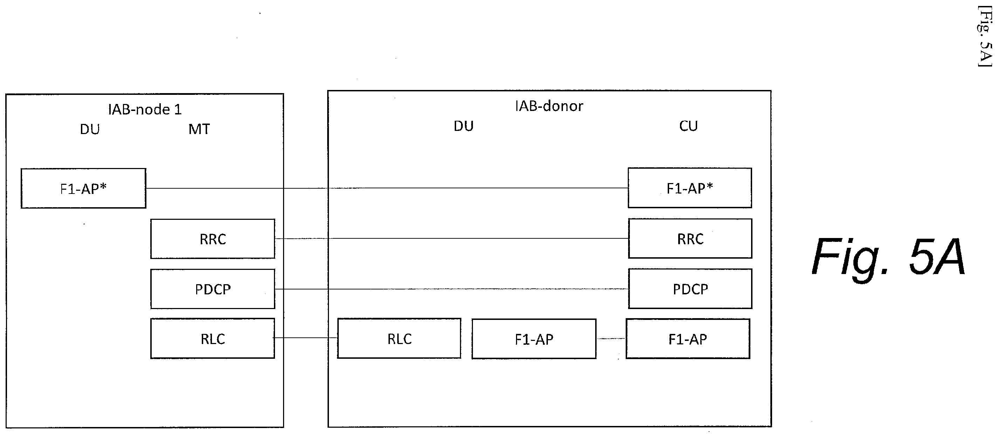

Fig. 5A is a functional block diagram of an example protocol stack configuration for the C-Plane between an IAB-node (IAB-node 1) directly connected to the IAB-donor (via a single hop). In this embodiment, the MT component of IAB-node 1 may establish an RRC connection with the CU component of the IAB-donor. In parallel, RRC may be used for carrying another signaling protocol in order for CU/IAB-donor to control the DU component resident in the IAB-node 1. In one embodiment, such a signaling protocol may be referred to as F1 Application Protocol* (F1-AP*), either the protocol referred as F1-AP specified in 3GPP TS 38.473 or a protocol based on the F1-AP with potential extended features to accommodate wireless backhauls (the original F1-AP is designed for wirelines). In other embodiments, F1-AP may be used for CU-DU connection inside the IAB-donor. It is assumed that below RLC, MAC/ PHY layers are shared with the U-Plane.

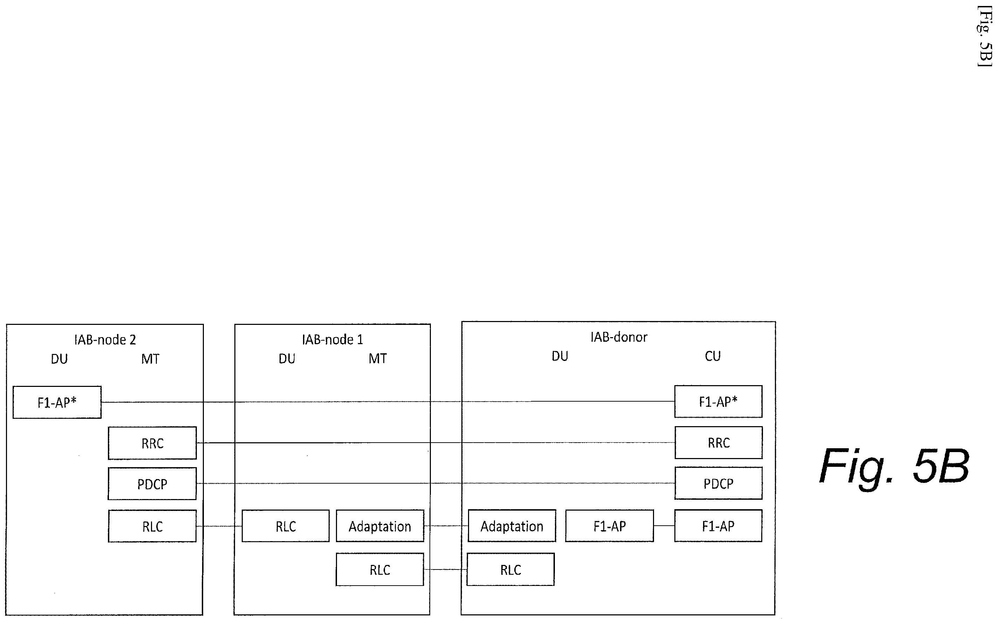

Fig. 5B depicts a functional block diagram of an example configuration of the C-Plane protocol stack for IAB-node 2, an IAB-node connected to the aforementioned IAB-node 1 (2 hops). In one embodiment, it may be assumed that the IAB-node 1 has already established RRC/F1-AP* connections with the IAB-donor as shown in Fig. 5A. In IAB-node 1 the signaling bearer for IAB-node 2 RRC/PDCP may be carried by the Adaptation Layer to the IAB-donor. Similar to Fig. 5A, the F1-AP* signaling is carried by the RRC of IAB-node 2.

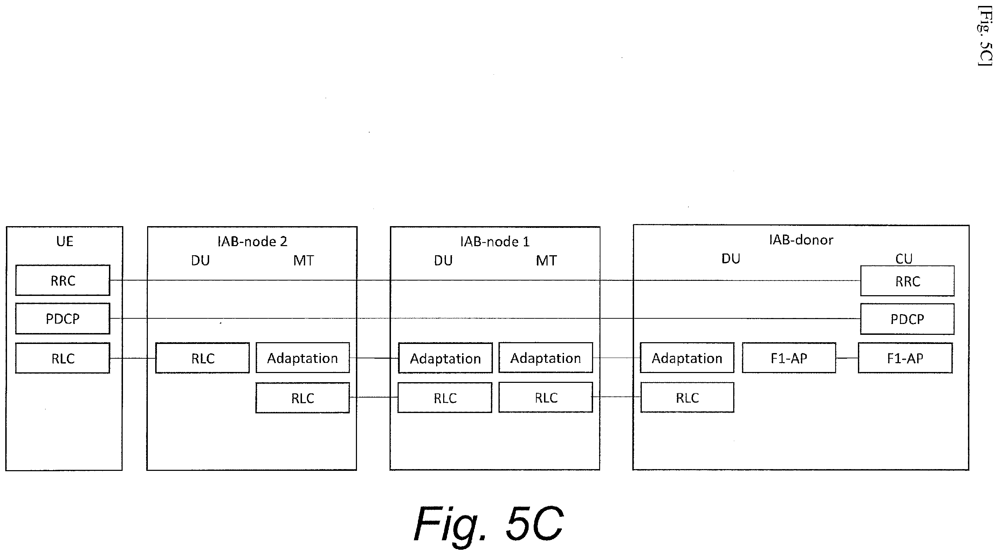

Fig. 5C depicts yet another functional block diagram of an example configuration of the C-Plane protocol stack for UE's RRC signaling under the 2-hop relay configuration shown in Fig. 5B. Accordingly, the UE having an MT component and functionality, via the C-Plane, may be connected to the CU of the IAB-donor. Though traffic is routed through IAB-node 2 and IAB-node 1, as depicted, the two nodes are passive nodes in that the data is passed to the next node(s) without manipulation. That is, data is transmitted by the UE to the node it is connected to, e.g., IAB-node 2, and then IAB-node 2 transmits the data to the node that is connected to, e.g., IAB-node 1, and then IAB-node 1 transmits the data (without manipulation) to the IAB-donor.

Figs. 5A, 5B, and 5C illustrate that the MT of each IAB-node or UE has its own end-to-end RRC connection with the CU of the IAB-donor. Likewise, the DU of each IAB-node has an end-to-end F1-AP* connection with the CU of the IAB-donor. Any IAB nodes present between such end points transparently convey RRC or F1-AP signaling traffic.

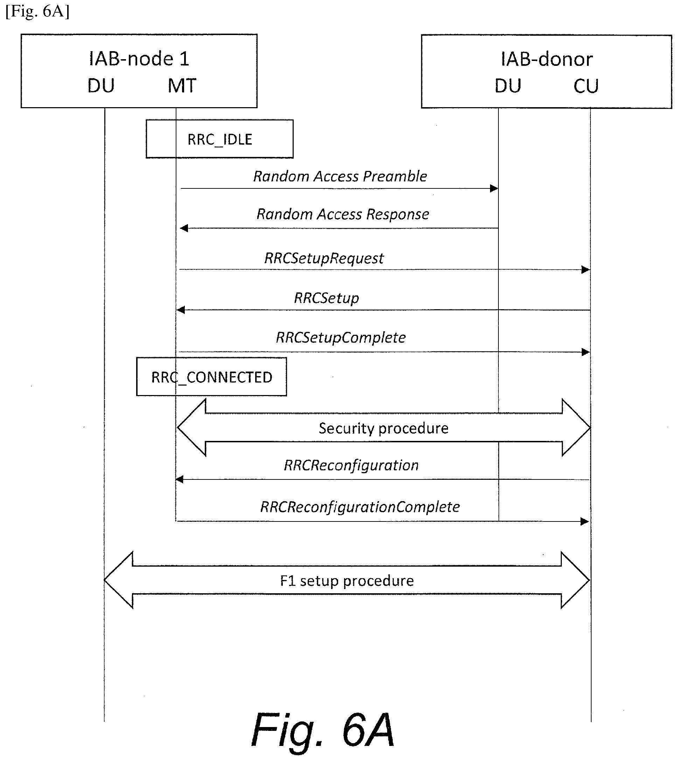

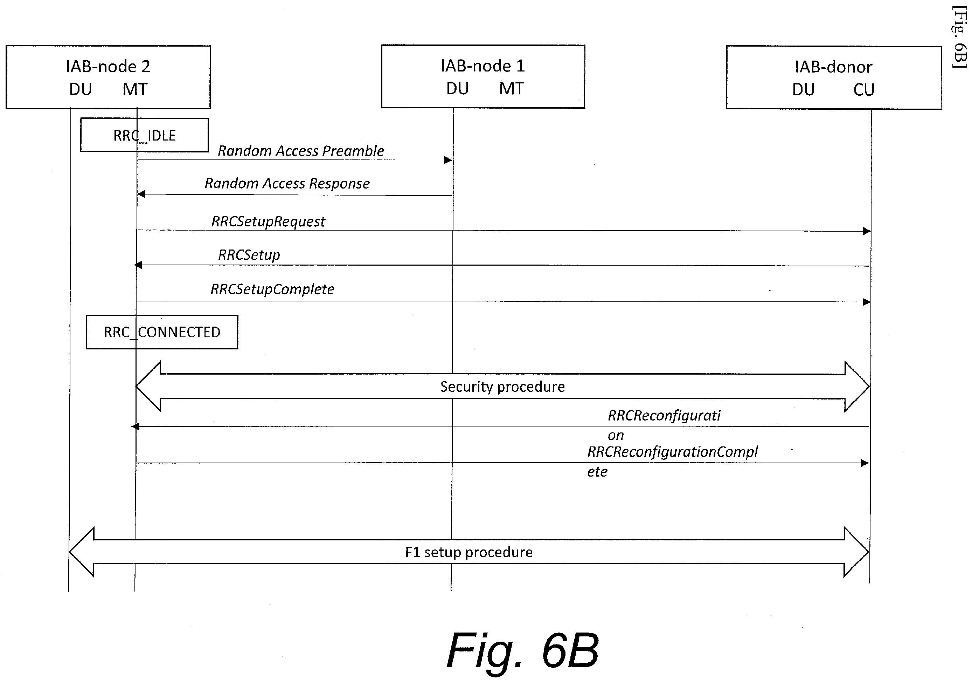

Figs. 6A and 6B are diagrams of an example flow of information transmit/receive and/or processing by IAB-node(s) and an IAB-donor according to aspects of the present embodiments.

Fig. 6A depicts an example message sequence for IAB-node 1 to establish an RRC connection, followed by F1-AP* connection. It is assumed that IAB-node 1 has been pre-configured (or configured by the network) with information that instructs how to select a cell served by the IAB-donor. As shown in the figure, IAB-node 1-in an idle state (RRC_IDLE)-may initiate an RRC connection establishment procedure by sending Random Access Preamble to the IAB-donor, which may be received and processed by the DU of the IAB-donor. Upon successful reception of Random Access Response from the IAB-donor, IAB-node 1 may send an RRCSetupRequest, followed by reception of an RRCSetup and transmission of RRCSetupComplete. At this point of the message sequence, the IAB-node 1 may enter a connected state (RRC_CONNECTED) with the IAB-donor, and may proceed with a security procedure to configure encryption/integrity protection features. The CU of the IAB-donor may further send an RRCReconfiguration to IAB-node 1, which may comprise configuration parameters to configure radio bearers (e.g., data radio bearers (DRBs) and signaling radio bearers (SRBs)). In some embodiments, the RRCReconfiguration is sent to modify an RRC connection and establish Radio Connection between a UE and the network, however, in the present embodiment, the RRCReconfiguration may also be sent to configure a connection between an IAB-node and the network. RRC Connection Reconfiguration messages may be used to, for example, establish/ modify/release Radio Bearers, and/or perform handover, etc. In one embodiment, any of the RRC messages transmitted from IAB-node 1 may include information identifying the IAB-node 1 as an IAB-node (not as a UE). For example, the Donor CU may be configured with a list of node identities (e.g., IMSI or S-TMSI) that may be allowed to use the service from the donor. The information may be used by the CU in the subsequence operations, for example, to distinguish a UE from an IAB-node.

As described above, following the RRC connection establishment procedure, the DU of IAB-node 1 and IAB-donor may proceed with F1 setup procedure using the F1-AP* protocol, which may activate one or more cells served by the DU of IAB-node 1-thereby allowing other IAB nodes and/or UEs to camp on the cell. In this procedure, the Adaptation Layer for IAB-node 1 and IAB-donor may be configured and activated as well.

Fig. 6B depicts an example message sequence or flow of information for IAB-node 2 to establish an RRC connection with IAB-donor, followed by the F1 setup procedure. It is assumed in this embodiment that IAB-node 1 has already performed the process disclosed in Fig. 6A to establish an RRC and F1-AP* connection. Referring back to Fig. 3, the IAB-node 2 shown in communication via the radio interface with IAB-node 1, may be also depicted in Fig. 6B as a child node of IAB-node 1 according to aspects of the present embodiments.

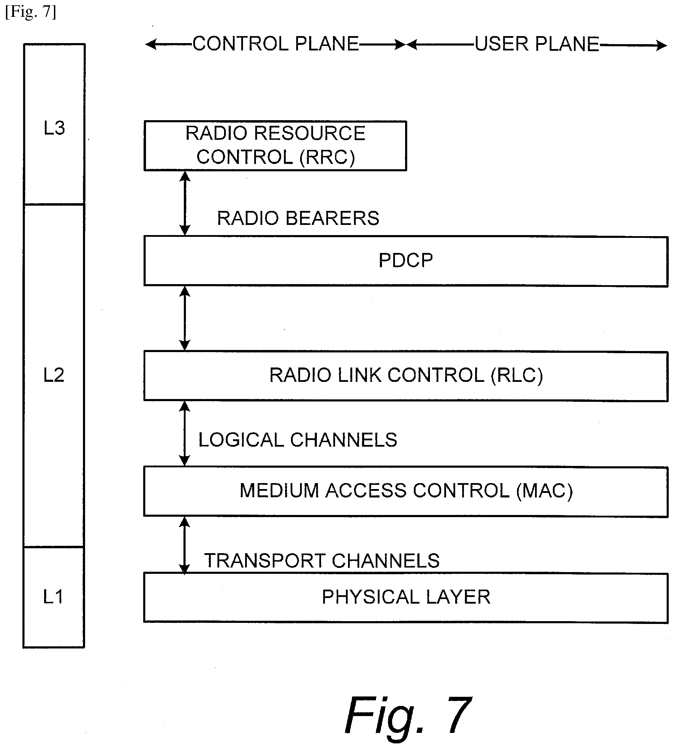

Fig. 7 is a diagram illustrating an example of a radio protocol architecture for the control and user planes in a mobile communications network. The radio protocol architecture for the UE and/or the gNodeB may be shown with three layers: Layer 1, Layer 2, and Layer 3. Layer 1 (L1 layer) is the lowest layer and implements various physical layer signal processing functions. Layer 2 (L2 layer) is above the physical layer and responsible for the link between the UE and/or gNodeB over the physical layer. In the user plane, the L2 layer may include a media access control (MAC) sublayer, a radio link control (RLC) sublayer, and a packet data convergence protocol (PDCP) sublayer, which are terminated at the gNodeB on the network side. Although not shown, the UE may have several upper layers above the L2 layer including a network layer (e.g., IP layer) that is terminated at the PDN gateway on the network side, and an application layer that is terminated at the other end of the connection (e.g., far end UE, server, etc.). The control plane also includes a radio resource control (RRC) sublayer in Layer 3 (L3 layer). The RRC sublayer is responsible for obtaining radio resources (i.e., radio bearers) and for configuring the lower layers using RRC signaling between the IAB-nodes and/or the UE and an IAB-donor.

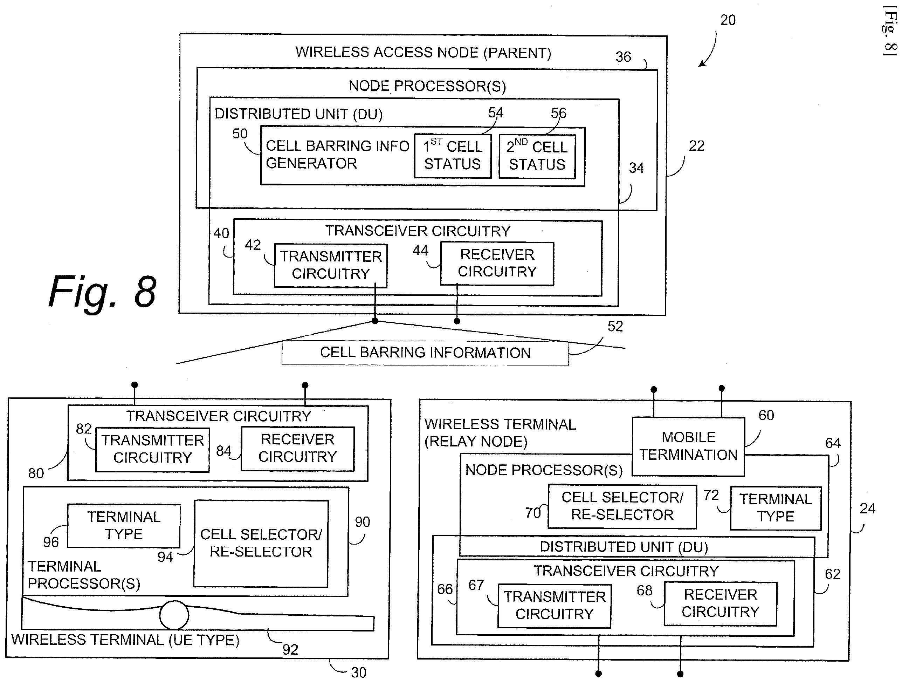

Fig. 8 shows an example diagram of a telecommunications system 20 also known as wireless relay network 20. The wireless relay network 20 comprises wireless access node 22; a first wireless terminal which serves as an IAB-node 24, also known as relay node 24; and a second wireless terminal which serves as a user equipment 30. The wireless access node 22 may also be known and described as a parent node 22, and may be either an IAB-node or a donor IAB-node. The first wireless terminal which serves as an IAB-node 24 may also be known as a child node, e.g., a child in relation to parent IAB-node 22, or may be known as an IAB-relay node 24. The configuration of wireless nodes and terminals of Fig. 8 should be understood in the context of Fig. 1 and Fig. 2. For example, if serving as a donor IAB node, the parent IAB-node 22 may further comprise a central unit (CU) (unillustrated) to be connected to a core network. Alternatively, if serving as a relay node, the parent IAB-node 22 may further comprise a relay node mobile termination (MT) (unillustrated) to be connected to one or more grandparent nodes through which parent IAB-node 22 may be connected to a core network. Similarly, it should be understood that the IAB-relay node 24 may serve one or more unillustrated further nodes or further wireless terminals, e.g., further user equipments. It should also be understood that the wireless relay network 20 may comprise plural parent nodes 22, that each parent node 22 may serve plural IAB-relay nodes 24 and user equipments 30, and that each IAB-relay node 24 may in turn serve plural user equipments 30.

Fig. 8 further shows various components and functionalities of the nodes and terminal illustrated therein. For example, Fig. 8 shows wireless access node 22 as comprising distributed unit 34. The distributed unit 34 may be realized by, e.g., be comprised of or include, one or more processor circuits, e.g., parent node processor(s) 36. The distributed unit 34 may comprise parent node transceiver circuitry 40, which in turn may comprise parent node transmitter circuitry 42 and parent node receiver circuitry 44. The parent node transceiver circuitry 40 includes antenna(e) for the wireless transmission. Parent node transmitter circuitry 42 includes, e.g., amplifier(s), modulation circuitry and other conventional transmission equipment. Parent node receiver circuitry 44 comprises, e.g., amplifiers, demodulation circuitry, and other conventional receiver equipment.

As further shown in Fig. 8, parent node processor(s) 36 of wireless access node 22 may comprise cell barring information generator 50. The message generator 50 serves to generate, e.g., a cell barring information 52 as described herein. As mentioned above, the cell barring information 52 includes information comprising at least first cell status information 54 and second cell status information 56.

As shown in Fig. 8 the IAB-node 24, also known as wireless relay node 24, in an example embodiment and mode comprises relay node mobile termination unit 60 and relay node distributed unit 62. The relay node mobile termination unit 60 and relay node distributed unit 62 may be realized by, e.g., by comprised of or include, one or more processor circuits, e.g., relay node processor(s) 64. The one or more relay node processor(s) 64 may be shared by relay node mobile termination unit 60 and relay node distributed unit 62, or each of relay node mobile termination unit 60 and relay node distributed unit 62 may comprise one or more relay node processor(s) 64. The relay node distributed unit 62 may comprise relay node transceiver circuitry 66, which in turn may comprise relay node transmitter circuitry 67 and relay node receiver circuitry 68. The relay node transceiver circuitry 66 includes antenna(e) for the wireless transmission. Relay node transmitter circuitry 67 may include, e.g., amplifier(s), modulation circuitry and other conventional transmission equipment. Relay node receiver circuitry 68 may comprise, e.g., amplifiers, demodulation circuitry, and other conventional receiver equipment.

Fig. 8 further shows that IAB-node 24A may comprise cell selector/re-selector 70 and terminal type memory 72. Both cell selector/re-selector 70 and terminal type memory 72 may be realized or comprised by relay node processor(s) 64. The terminal type memory 72 serves to inform the relay node 24 that it is an IAB-node or a relay node-type of wireless terminal, rather than a UE-type of wireless terminal.

Fig. 8 shows user equipment 30 as comprising, in an example, non-limiting embodiment and mode, terminal transceiver circuitry 80. The transceiver circuitry 80 in turn may comprise terminal transmitter circuitry 82 and terminal receiver circuitry 84. The terminal transceiver circuitry 80 includes antenna(e) for the wireless transmission. The terminal transmitter circuitry 82 may include, e.g., amplifier(s), modulation circuitry and other conventional transmission equipment. The terminal receiver circuitry 84 may comprise, e.g., amplifiers, demodulation circuitry, and other conventional receiver equipment. Fig. 8 further shows user equipment 30 as also comprising node processor circuitry, e.g., one or more terminal processor(s) 90, and interfaces 92, including one or more user interfaces. Such user interfaces may serve for both user input and output operations, and may comprise (for example) a screen such as a touch screen that can both display information to the user and receive information entered by the user. The user interfaces 92 may also include other types of devices, such as a speaker, a microphone, or a haptic feedback device, for example.

In an example, non-limiting embodiment and mode shown in Fig. 8, the user equipment 30 may include cell selector/re-selector 94 and terminal type memory 96. The cell selector/re-selector 94 serves to inform the wireless terminal 30 that it is a UE-type of wireless terminal, rather than an IAB-node or a relay node-type of wireless terminal.

The wireless relay network 20 of Fig. 8 comprising the parent node 22, IAB-relay node 24, and user equipment 30 provides a generic context for describing various example embodiments and modes of the threshold. The example embodiments and modes, although discussed separately, may include features or aspects that may be combined with other example embodiments and modes, or even entirely combined with other example embodiments and modes.

In some configurations, the DU of each IAB-node/donor, e.g., the distributed unit 34 of parent node 22 and the relay node distributed unit 62 of IAB-relay node 24, may broadcast information necessary to be discovered by UEs and/or other child IAB-nodes. Such information may comprise synchronization signals, master information block (MIB) and one or more system information blocks (SIBs). The SIBs may further comprise an essential SIB (e.g. SIB1) and other SIBs (e.g. SIB2, SIB3, ... etc.). As used herein, an "essential SIB" is a type of SIB that may carry information necessary for camping and initial access, whereas the other SIBs may carry all other information, such as information about neighbor cells.

When the wireless relay network 20 detects a congestion (or any other reasons), the network 20 may desire to restrict usage of the network resource usage from some UEs and/or IAB-nodes. In some configurations, such restrictions may be achieved by a cell barring, or "cell reservations".

In a cellular network, the cell barring may be implemented by including barring status in a broadcast signal from base stations. Any wireless terminal in the coverage of a cell served by such a base station may first acquire the broadcast signal and examine the barring status. If the barring status indicates that the cell is restricted, e.g., barred, the wireless terminal may consider that this cell is not suitable for camping and look for other cells. Otherwise, the terminal may camp on the cell.

For example, in the 5G cellular system, a gNB may broadcast information for cell barring/reservations (3GPP TS 38.331). The information for cell barring/reservations which is broadcast may include, for example, an information element cellBarred which is included in a Master System Information Block in the example manner shown in Table 1; an information element cellAccessRelatedInfo which is included in a SIB 1 message in the example manner shown in Table 2 and having example content shown in Table 3; and an information element PLMN-IdentityInfoList which is included in the information element cellAccessRelatedInfo and which has content as shown in Table 4.

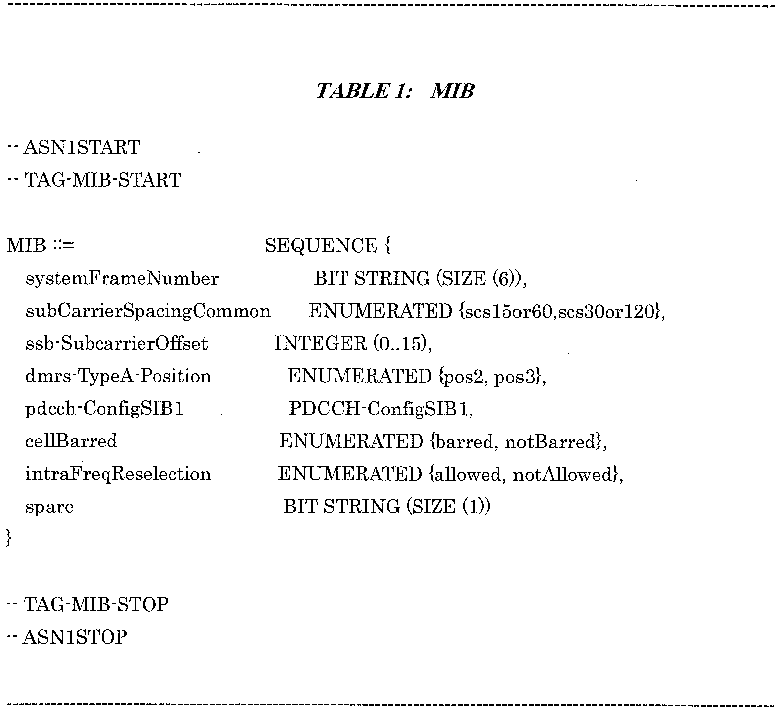

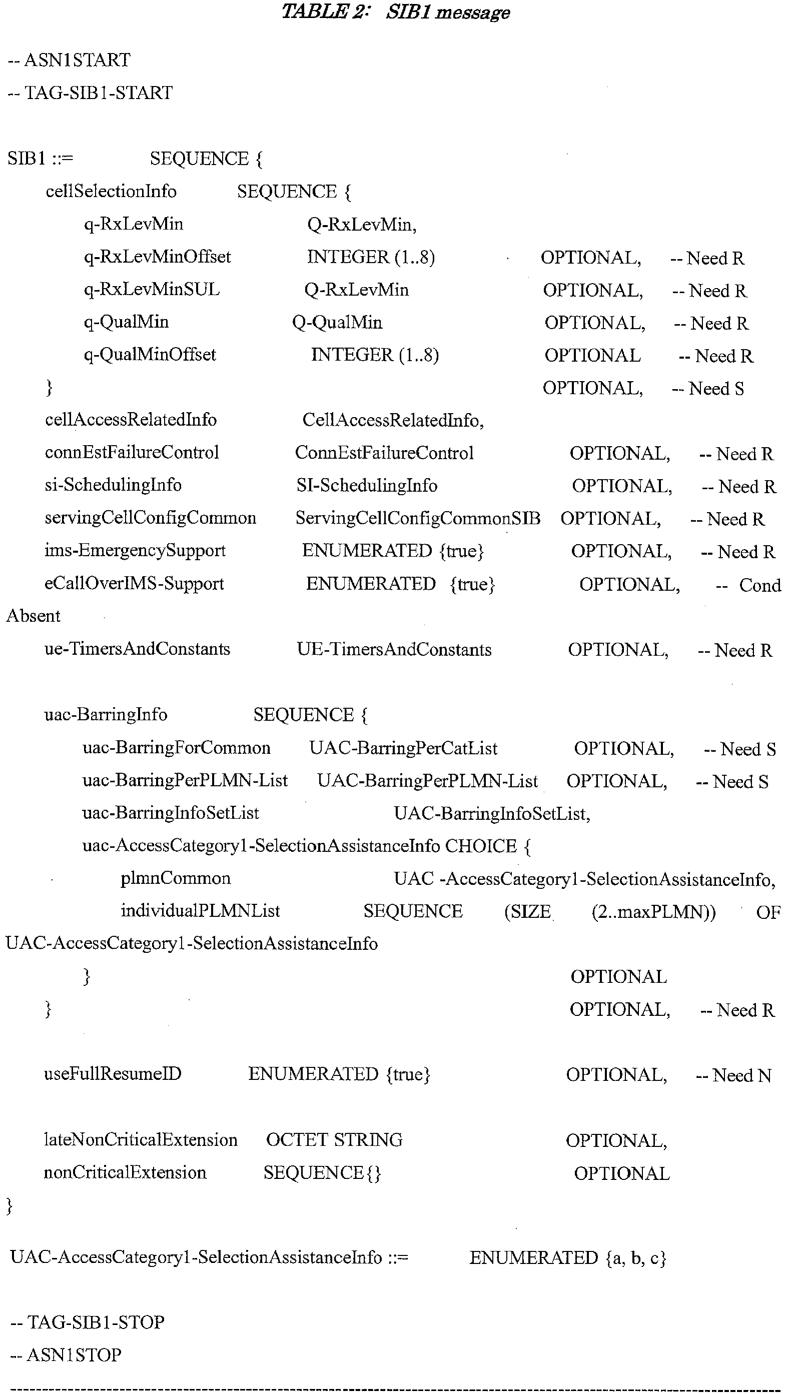

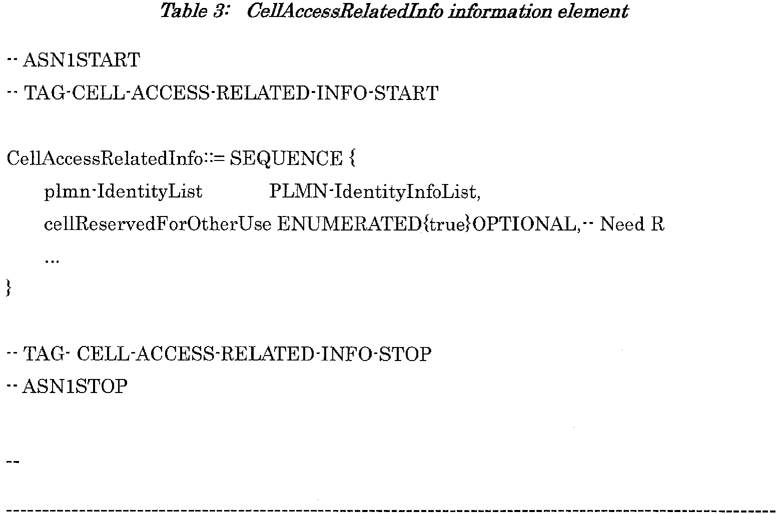

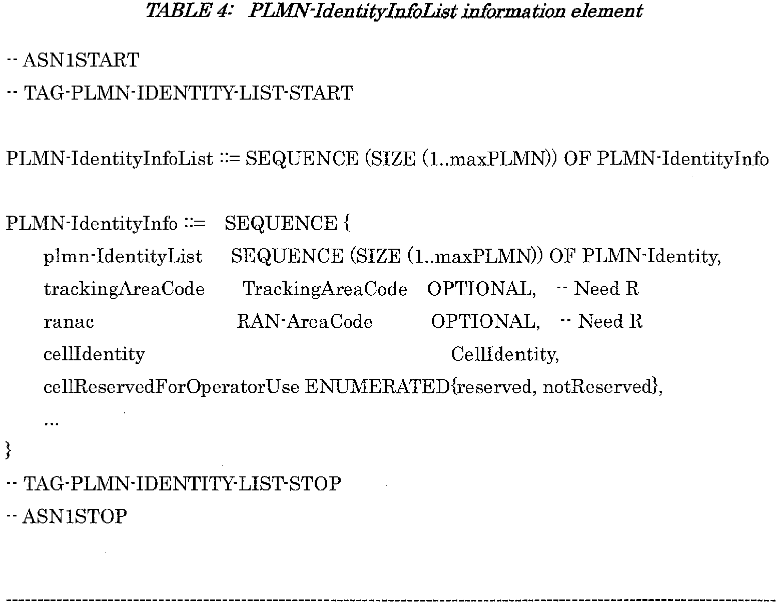

In some example embodiments and modes, when camping on a cell, a terminal such as user equipment 30 or an IAB-node such as IAB-relay node 24 may acquire MIB and SIB1 formatted as shown above in Table 1 and Table 2, respectively, and may proceed to processing the information related to cell barring/reservations. In some configurations, the UE 30 or the IAB-node 24 may follow the procedure or listing specified in 3GPP TS 38.304, which is also shown in Table 5. The procedure described and shown in Table 5 may also be referred to as "listing 1", and specifically includes a procedure for a "barred cell" which involves an end portion of the listing which begins with an includes the last non-indented line thereof.

**Table 5: 3GPP TS 38.304 Procedure/Listing 1**

| |
|---|
| Cell status and cell reservations are indicated in the *MIB or SIB1* message TS 38.331 [3] by means of three fields: |
| *- cellBarred* (IE type: "barred" or "not barred") |
| Indicated in *MIB* message. In case of multiple PLMNs indicated in *SIB1,* this field is common for all PLMNs |
| - *cellReservedForOperatorUse* (IE type: "reserved" or "not reserved") |
| Indicated in *SIB1* message. In case of multiple PLMNs indicated in *SIB1,* this field is specified per PLMN. |
| - *cellReservedForOtherUse* (IE type: "true") |
| Indicated in *SIB1* message. In case of multiple PLMNs indicated in *SIB1,* this field is common for all PLMNs. |
| When cell status is indicated as "not barred" and "not reserved" for operator use and not "true" for other use, |
| - All UEs shall treat this cell as candidate during the cell selection and cell reselection procedures. |
| When cell status is indicated as "true" for other use, |
| - The UE shall treat this cell as if cell status is "barred". |
| When cell status is indicated as "not barred" and "reserved" for operator use for any PLMN and not "true" for other use, |
| - UEs assigned to Access Identity 11 or 15 operating in their HPLMN/EHPLMN shall treat this cell as candidate during the cell selection and reselection procedures if the field *cellReservedForOperatorUse* for that PLMN set to "reserved". |
| - UEs assigned to an Access Identity in the range of 0 to 10 and 12 to 14 shall behave as if the cell status is "barred" in case the cell is "reserved for operator use" for the registered PLMN or the selected PLMN. |
| NOTE 1: Access Identities 11, 15 are only valid for use in the HPLMN/ EHPLMN; Access Identities 12, 13, 14 are only valid for use in the home country as specified in 3GPP TS 22.261 [12]. |
| When cell status "barred" is indicated or to be treated as if the cell status is "barred", **[procedure for a "barred" cell]** |
| - The UE is not permitted to select/reselect this cell, not even for emergency calls. |
| - The UE shall select another cell according to the following rule: |
| - If the cell is to be treated as if the cell status is "barred" due to being unable to acquire the *MIB* or the *SIB1*: |
| - the UE may exclude the barred cell as a candidate for cell selection/reselection for up to 300 seconds. |
| - the UE may select another cell on the same frequency if the selection criteria are fulfilled. |
| - else |
| - If the field *intraFreqReselection* in *MIB* message is set to "allowed", the UE may select another cell on the same frequency if re-selection criteria are fulfilled; |
| - The UE shall exclude the barred cell as a candidate for cell selection/reselection for 300 seconds. |
| - If the field *intraFreqReselection* in *MIB* message is set to "not allowed" the UE shall not re-select a cell on the same frequency as the barred cell; |
| - The UE shall exclude the barred cell and the cells on the same frequency as a candidate for cell selection/reselection for 300 seconds. |

In some configurations, the Access Identities may be defined in 3GPP TS 22.261 as shown in Table 6.

**Table 6: Access Identities**

| **Access Identity number** | **UE configuration** |
|---|---|
| 0 | UE is not configured with any parameters from this table |
| 1 (NOTE 1) | UE is configured for Multimedia Priority Service (MPS). |
| 2 (NOTE 2) | UE is configured for Mission Critical Service (MCS). |
| 3-10 | Reserved for future use |
| 11 (NOTE 3) | Access Class 11 is configured in the UE. |
| 12 (NOTE 3) | Access Class 12 is configured in the UE. |
| 13 (NOTE 3) | Access Class 13 is configured in the UE. |
| 14 (NOTE 3) | Access Class 14 is configured in the UE. |
| 15 (NOTE 3) | Access Class 15 is configured in the UE. |
| NOTE 1: Access Identity 1 is used to provide overrides according to the subscription information in UEs configured for MPS. The subscription information defines whether an overide applies to UEs within one of the following categories: | |
| a) UEs that are configured for MPS; | |
| b) UEs that are configured for MPS and are in the PLMN listed as most preferred PLMN of the country where the UE is roaming in the operator-defined PLMN selector list or in their HPLMN or in a PLMN that is equivalent to their HPLMN; | |
| c) UEs that are configured for MPS and are in their HPLMN or in a PLMN that is equivalent to it. | |
| NOTE 2: Access Identity 2 is used to provide overrides according to the subscription information in UEs configured for MCS. The subscription information defines whether an overide applies to UEs within one of the following categories: | |
| a) UEs that are configured for MCS; | |
| b) UEs that are configured for MCS and are in the PLMN listed as most preferred PLMN of the | |
| country where the UE is roaming in the operator-defined PLMN selector list or in their HPLMN or in a PLMN that is equivalent to their HPLMN; | |
| c) UEs that are configured for MCS and are in their HPLMN or in a PLMN that is equivalent to it. | |
| NOTE 3: Access Identities 11 and 15 are valid in Home PLMN only if the EHPLMN list is not present or in any EHPLMN. Access Identities 12, 13 and 14 are valid in Home PLMN and visited PLMNs of home country only. For this purpose the home country is defined as the country of the MCC part of the IMSI. | |

### Embodiment 1

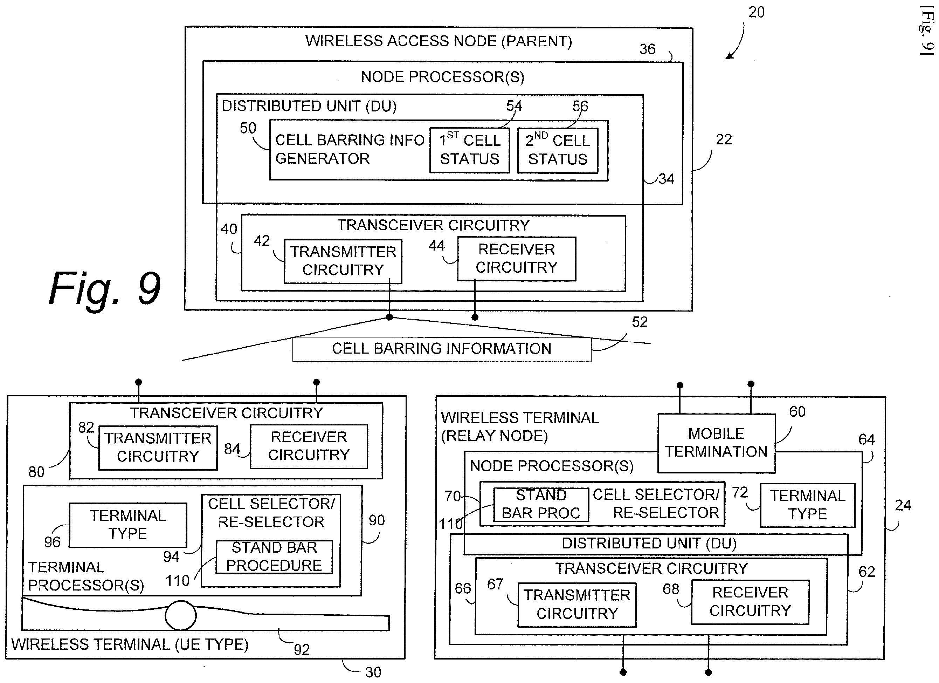

Fig. 9 shows an example wireless relay network 20 including parent node 22, IAB-relay node 24, and user equipment 30 as shown in Fig. 8. Elements and functionalities of the nodes and terminals of Fig. 9 are essentially the same as those of Fig. 8 unless otherwise specified or otherwise clear from the context. In the example embodiment and mode of Fig. 9, unless otherwise specified the IAB-relay node 24 and the user equipment 30 both perform the same cell barring procedure, e.g., the same procedure is performed by both IAB-relay node 24 and user equipment 30 when the cell barring information message 52 indicates that the respective IAB-relay node 24 or user equipment 30 is barred for the cell in which the cell barring information message 52 is transmitted by parent node 22. Fig. 9 depicts that same barring procedure which may be executed by IAB-relay node 24 and user equipment 30 as standard barring procedure 110. As used herein, "standard" is intended to mean a barring procedure that applies to and/or is to be used by both to IAB-relay nodes and user equipments.

Thus, in the example embodiment of Fig. 9, the UE and the IAB-node may perform a same procedure, such as the procedure shown in Table 5 as an example. Thus, when the UE 30 is barred, the IAB-node 24 may be also barred.

There may be some exceptions to the general rule of both IAB-relay node 24 and user equipment 30 performing the standard barring procedure 110. A first exception in a case in which the information element cellReservedForOperatorUse (see Table 5) is "reserved" for some of the PLMNs, and the UE and the IAB-node camp on different PLMNs. In this case, a node (UE or IAB-node) that selects one of the "reserved" PLMNs may be barred, while the other that selects a PLMN not "reserved" may camp on the cell.

A second exception is a case in which the IAB-node is configured with Access Identity 11 or 15 (see Table 6). In this case, when selecting one of the "reserved" PLMNs, the UE (configured with Access Identity other than 11 or 15) may be barred while the IAB-node may not be barred.

### Embodiment 2

In a second example generic embodiment and mode and its sub-embodiments described herein, an example wireless relay network 20 includes parent node 22, IAB-relay node 24, and user equipment 30 as shown in Fig. 8. Elements and functionalities of the nodes and terminals of the second example embodiments and modes and the sub-modes are again essentially the same as those of Fig. 8 unless otherwise specified or otherwise clear from the context. In the second example embodiment and mode a parent node (e.g. eNB, gNB, IAB-node, or IAB-donor) may restrict UEs and/or other IAB-nodes camping on a cell served by the parent node in finer granularity. Specifically, the cell may be configured (or preconfigured) with one of the barring modes of Table 7.

| *TABLE 7: CELL BARRING MODES* |
|---|
| Barring mode 1: allowing both UEs' and IAB-nodes' camping |
| Barring mode 2: allowing UEs' but barring IAB-nodes' camping |
| Barring mode 3: barring UEs' but allowing IAB-nodes' camping |
| Barring mode 4: barring both UEs' and IAB-nodes' camping |

During a cell selection/reselection process, a UE 30 or the MT relay node mobile termination unit 60 of an IAB-node 24 may determine whether a cell allows camping, e.g., the cell is considered as a candidate for cell selection/reselection, based on the current barring mode of the cell.

### Embodiment 2-1

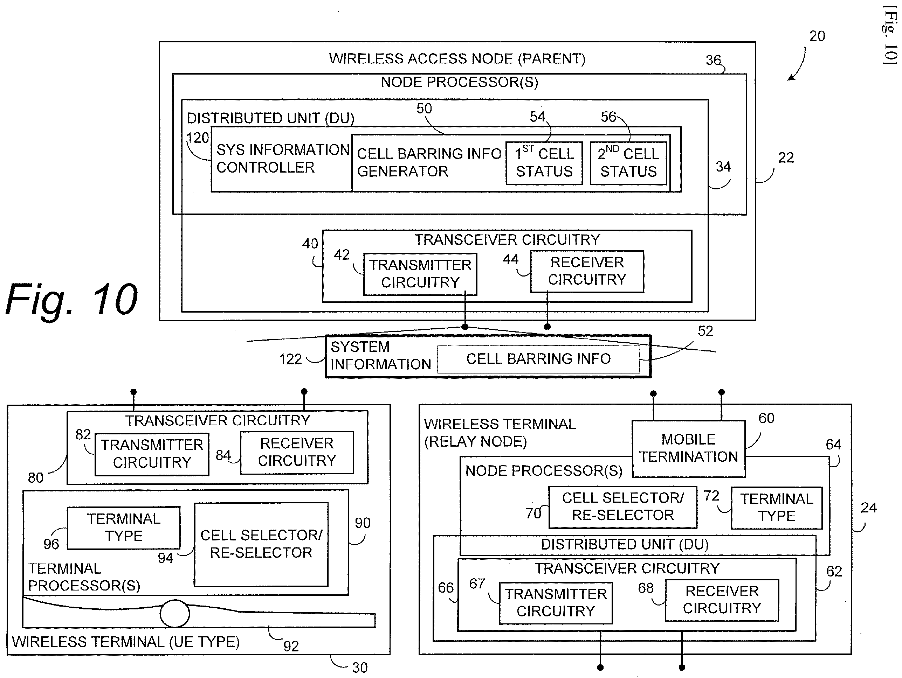

Fig. 10 shows an example wireless relay network 20 including parent node 22, IAB-relay node 24, and user equipment 30 in which cell barring information message 52 may be included in system information. Elements and functionalities of the nodes and terminals of Fig. 10 are essentially the same as those of Fig. 8 unless otherwise specified or otherwise clear from the context. In particular, in the example embodiment and mode of Fig. 10 the cell barring information generator 50 of parent node 22 may comprise or be included in system information controller 120. The system information controller 120 generates system information 122, which may take the form of one or more system information blocks (SIB) as described herein.

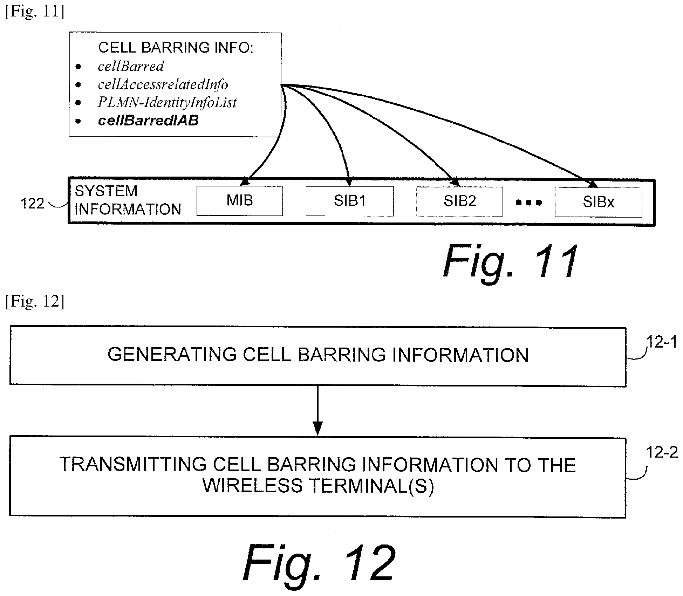

In one configuration, the barring mode, e.g., the cell barring information, in part or in whole, may be broadcasted by the parent node using one or more fields, parameters or information elements in the system information. Fig. 11 shows how an example embodiment and mode in which the cell barring information may be transmitted in one or more system information blocks (SIB), such as in one or more of a Master Information Block, in SIB1, or in one or more other system information blocks (SIBs), the other system information blocks being indicated as blocks SIB2 ... SIBx in Fig. 11. The fact that Fig. 11 shows arrows from the cell barring information to each of the MIB, SIB1, and other SIBs does not necessarily mean that the cell barring information is distributed to or included in each such system information block, but only that the cell barring information may be included in one or more system information blocks, either to one system information block or any combination of system information blocks.

Fig. 11 further shows that, in a non-limiting example, the system information may include, in some of the system information blocks (MIB, SIB1 or other SIB(s)), the one or more information elements or fields of the type discussed earlier as being pertinent to cell barring, as well as a further field of a type herein for convenience named cellBarredIAB and having an example content illustrated in Table 8. As shown in Fig. 11, the cell barring information may include the earlier-described information elements or elements such as cellBarred (see Table 1), cell AccessRelatedInfo (see Table 2 and Table 3); and PLMN-IdentityInfoList (see Table 4). Generally, the information element cellBarred is included in the Master Information Block (MIB).

| *TABLE 8: cellBarredIAB INFORMATION ELEMENT* |
|---|
| *cellBarredIAB* ENUMERATED {barred, notBarred}, |
| *- cellBarredIAB* (IE type: "barred" or "not barred") |
| This field indicates if the cell is barred for MTs of IAB-nodes. |
| This field is ignored by UEs. |

Accordingly, the information element cellBarredIAB may be configured independently from the fields disclosed in Embodiment 1, e.g., independently of cellBarred, cellAccessRelatedInfo; and PLMN-IdentityInfoList. A wireless terminal, with a terminal type being either a UE or a relay node, e.g., a user equipment 30 or a relay node mobile termination unit 60 of an IAB-node 24, may determine which barring fields/parameters to use, depending on its terminal type. For example, in a case that the terminal type is a relay node, the relay node mobile termination unit 60 of the IAB-node 24 may ignore cellBarred in MIB, which is applicable only to UEs (not to IAB-nodes) and may use cellBarredIAB instead to determine the cell status (barred or not barred). Meanwhile, in a case that the terminal type is a UE such as user equipment 30, the UE may behave as disclosed in Embodiment 1: use cellBarred to determine the cell status. In either case, if the cell status "barred" is indicated, the procedure (procedure for a "barred" cell) in Listing 1 of Table 5 may be performed.

In some example configurations, the user equipment 30 may ignore or may not recognize cellBarredIAB, if in fact the user equipment 30 receives the cellBarredIAB information element. In another configuration, the UE may not even attempt to receive the system information block where cellBarredIAB is included.

Fig. 10 thus shows a wireless access node 22 of a radio access network (RAN) 20 that communicates over a radio interface with at least one wireless terminal. A wireless terminal in communication with parent node 22 possesses a terminal type, such terminal type being either a user equipment (UE) terminal type or a relay node terminal type. The parent node 22 comprises parent node transmitter circuitry 42 which is configured to transmit cell barring information to the wireless terminal. The parent node 22 of Fig. 10 further comprises system information controller 120, which in turn comprises cell barring information generator 50 and which may be formed by or comprise, e.g., be included in parent node processor(s) 36. The cell barring information generator 50 generates or configures the cell barring information to indicate (1) first cell status 54 dedicated for the wireless terminal of the terminal type being a UE and (2) second cell status 56 dedicated for the wireless terminal of the terminal type being a relay node. Each of the first cell status and the second cell status are configured to enable a wireless terminal to determine whether or not camping on a cell served by the wireless access node is allowed (not barred) or not allowed (barred).

Fig. 12 shows example, basic, representative steps or acts performed by the parent node 22 of Fig. 10. Act 12-1 comprises generating cell barring information. As indicated above, the cell barring information indicates first barring status dedicated for the wireless terminal of the terminal type being a UE and second barring status dedicated for the wireless terminal of the terminal type being a relay node, the barring status being used to determine whether or not camping on a cell served by the wireless access node is allowed (not barred) or not allowed (barred). Act 12-2 comprises transmitting cell barring information to the wireless terminal(s), e.g., to one or both of IAB-relay node 24 and user equipment 30.

Fig. 10 further shows a wireless terminal of a radio access network (RAN) that communicates over a radio interface with a wireless access node. In fact, Fig. 10 shows two wireless terminals: IAB-relay node 24 and user equipment 30. Each wireless terminal possesses a terminal type as being either a user equipment (UE) terminal type (in the case of user equipment 30) or a relay node terminal type (as in the case of IAB-relay node 24). Regardless of terminal type, the wireless terminal comprises: receiver circuitry and processor circuitry. For example, IAB-relay node 24 comprises relay node mobile termination unit 60 as receiver circuitry and relay node processor(s) 64; user equipment 30 comprises terminal receiver circuitry 84 and terminal processor(s) 90. The receiver circuitry is configured to receive the cell barring information from the wireless access node. The processor circuitry is configured to determine, based on the cell barring information, whether or not the wireless terminal treats a cell served by the wireless access node as a candidate during cell selection and cell reselection procedure. Such determination of candidacy may be performed, for example, by the cell selector/ re-selector 70 of IAB-relay node 24 and the terminal type memory 96 of user equipment 30. The cell barring information indicates first cell status dedicated for the wireless terminal of the terminal type being a UE and second cell status dedicated for the wireless terminal of the terminal type being a relay node. Each of the first cell status and the second cell status may be used to determine whether or not camping on a cell served by the wireless access node is allowed (not barred) or not allowed (barred). Moreover, the processor circuitry uses one of the first barring status or the second barring status based on the terminal type.

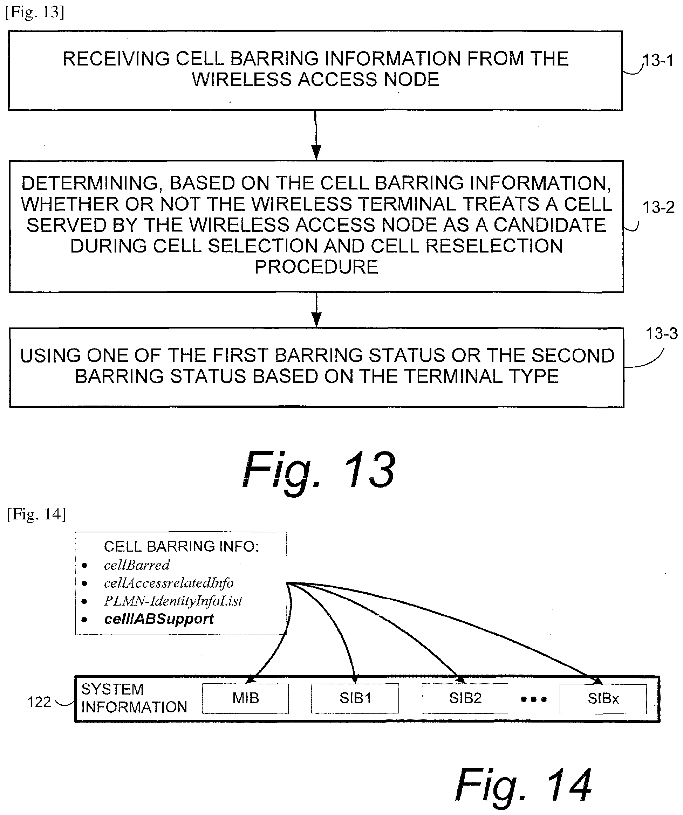

Fig. 13 shows example, basic, representative steps or acts performed by a wireless terminal of Fig. 10, e.g., either by IAB-relay node 24 or user equipment 30. Act 13-1 comprises receiving cell barring information from the wireless access node 22. As indicated above, the cell barring information indicates first barring status dedicated for the wireless terminal of the terminal type being a UE and second barring status dedicated for the wireless terminal of the terminal type being a relay node, the barring status being used to determine whether or not camping on a cell served by the wireless access node is allowed (not barred) or not (barred). Act 13-2 comprises determining, based on the cell barring information, whether or not the wireless terminal treats a cell served by the wireless access node as a candidate during cell selection and cell reselection procedure. Act 13-3 comprises using one of the first barring status or the second barring status based on the terminal type. Usage of the first barring status or second barring status may comprise using the barring status to make a cell selection or re-selection.

Thus, in an example configuration, the first cell status information 54 may be obtained from the information element cellBarred and the second cell status information 56 may be obtained from the information element cellBarredIAB. In such a configuration, the barring modes (1) to (4) disclosed in Table 7 above may be achieved in the manner shown in Table 9.

| *TABLE 9: CELL BARRING MODES: FIRST EXAMPLE IMPLEMENTATION* |
|---|
| Barring mode 1: *cellBarred* = notBarred, *cellBarredIAB =* notBarred |
| Barring mode 2: *cellBarred* = notBarred, *cellBarredIAB =* Barred |
| Barring mode 3: *cellBarred =* Barred, *cellBarredIAB* = notBarred |
| Barring mode 4: *cellBarred =* Barred, *cellBarredIAB* = Barred |

It should be noted that, in a case that a node does not support IAB relaying functionality, e.g., in a case in which the node is not configured to be a parent node of other IAB nodes, the node may set "barred" to cellBarredIAB, in order to prevent other IAB-nodes from camping on the cell served by such node.

Furthermore, in one example configuration cellBarredIAB may be optionally present in the system information block(s). If not present, the relay node mobile termination unit 60 of the IAB-node that receives the system information block(s) may treat the cell as the cell status is "barred".

### Embodiment 2-2

Embodiment 2-2 is a sub-embodiment of Embodiment 2, and in a sense is logically equivalent to sub-embodiment 2-1. Elements and functionalities of the nodes and terminals of sub-embodiment 2-2 are essentially the same as those of Fig. 8 and 10 unless otherwise specified or otherwise clear from the context. However, the sub-embodiment 2-2 employs in the cell barring information a parameter different from the cellBarredIAB of sub-embodiment 2-1. Specifically, and as shown in Fig. 14, instead of the aforementioned parameter cellBarredIAB, for the sub-embodiment the parameter cellIABSupport is carried in some of the system information blocks. The parameter or information element cellIABSupport is illustrated and described by Table 10.

| *TABLE 10: cellIABSupport INFORMATION ELEMENT* |
|---|
| cellIABSupport ENUMERATED {supported, notSupported} |
| - *cellIABSupport* (IE type: "supported" or "not supported") |
| This field indicates if the cell supports IAB relaying functionality. |
| This field is ignored by UEs. |

Accordingly, the information element or field cellIABSupport may be configured independently from the fields disclosed in the previous embodiments. A wireless terminal, with a terminal type being either a UE 30 or a relay node (a relay node mobile termination unit 60 of an IAB-node 24), may determine which barring fields/parameters to use, depending on its terminal type. For example, in a case that the terminal type is a relay node 24, the relay node mobile termination unit 60 of the IAB-node 24 ignores cellBarred in MIB and use cellIABSupport to determine if the IAB-node 24 is allowed to camp on the cell. If cellIABSupport is "supported", the IAB-node 24 considers the cell as a candidiate. If cellIABSupport is "notSupported", the IAB-node may treat the cell as if the cell status is "barred". On the other hand, in a case that the terminal type is a UE 30, the UE 30 behaves as disclosed in Embodiment 1: use cellBarred to determine the cell status. In either case, if the cell status "barred" is indicated or to be treated as if the cell status is "barred", the procedure or Listing 1 (procedure for a "barred" cell) of Table 5 may be performed.

The acts of Fig. 12 for the parent node 22 of Fig. 10 are executed for the parent node 22 of this sub-embodiment 2-2, and likewise the acts of Fig. 13 for the wireless terminal(s) of Fig. 10 are applicable and executed for the wireless terminal(s) of the this sub-embodiment 2-2, it being understood that the barring and/or candidacy of the wireless terminal may be determined for IAB-relay node 24 with reference to cellIABSupport of the sub-embodiment 2-2 rather than the information element cellBarredIAB of sub-embodiment 2-1.

In some configurations of the sub-embodiment 2-2, the UE 30 may ignore or may not recognize the information element cellIABSupport, if the user equipment 30 in fact receives information element cellIABSupport. In another configuration of the sub-embodiment 2-2, the UE may not attempt to receive the system information block where cellIABSupport is included.

Thus, in an example configuration for the sub-embodiment 2-2, the barring modes (1) to (4) disclosed in Table 7 may be achieved using the information element cellIABSupport in the manner of Table 11.

| *TABLE 11: CELL BARRING MODES: SECOND EXAMPLE IMPLEMENTATION* |
|---|
| Barring mode 1: *cellBarred =* notBarred, *cellIABSupport* = supported |
| Barring mode 2: *cellBarred =* notBarred, *cellIABSupport* = notSupported |
| Barring mode 3: *cellBarred =* Barred, *cellIABSupport* = supported |
| Barring mode 4: *cellBarred =* Barred, *cellIABSupport* = notSupported |

Furthermore, in one example configuration the information element cellIABSupport may be optionally present in the system information block(s). If not present, the relay node mobile termination unit 60 of the IAB-node 24 that receives the system information block(s) may consider cellIABSupport = notSupported. Alternatively, in another configuration, the relay node mobile termination unit 60 of the IAB node 24 may treat the absence of cellIABSupport in the system information block(s) as "Supported".

### Embodiment 2-3

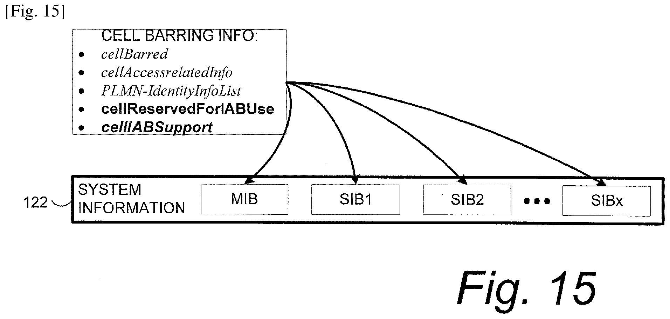

Embodiment 2-3 is a sub-embodiment of Embodiment 2, and in a sense is logically equivalent to sub-embodiment 2-1 and sub-embodiment 2-2. Elements and functionalities of the nodes and terminals of sub-embodiment 2-2 are essentially the same as those of Fig. 8 and 10 unless otherwise specified or otherwise clear from the context. However, the sub-embodiment 2-2 employs in the cell barring information a set of parameters different from the cellBarredIAB of sub-embodiment 2-1 or the solitary use of cellIABSupport of sub-embodiment 2-2. In particular, sub-embodiment 2-3 employs in the cell barring information a field or information element which indicates that the cell is reserved for IAB-nodes. That is, in addition to the field cellBarred (disclosed, e.g., in Listing 1 and Table 5), the sub-embodiment 2-3 may employ two fields or information elements cellReservedForIABUse and cellIABSupport shown in Table 12. Inclusion and use of the two fields cellReservedForIABUse and cellIABSupport is illustrated in Fig. 15.

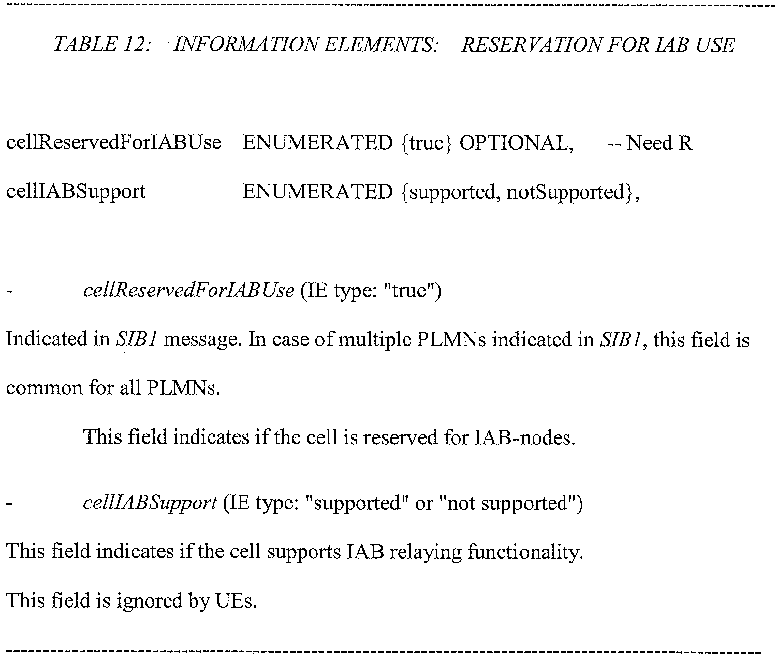

The field cellReservedForIABUse may indicate that the cell is reserved for IAB-nodes, e.g., that only IAB-nodes are allowed to camp. In one example configuration, this field cellReservedForIABUse is identical to cellReservedForOtherUse disclosed on Embodiment 1. In another example configuration, this field cellReservedForIABUse is a separate field. The field cellIABSupport is the field disclosed in Embodiment 2-2. Similar to the previous embodiments, each of these fields of sub-embodiment 2-3 may be included in one or more of the system information blocks (MIB, SIB1, or other SIB(s)), as depicted by way of example in Fig. 15.

In sub-embodiment 2-3, the information element cellBarred in MIB may apply to both UEs 30 and IAB-nodes 24. That is, if cellBarred = barred, camping is barred for UEs 30 as well as IAB-nodes 24. Otherwise, the UEs/IAB-nodes may proceed to examining cellReservedForIABUse. If cellReservedForIABUse is true, the cell is reserved for IAB-nodes and therefore the UE 30 may treat this cell as if it is barred, while the relay node mobile termination unit 60 of the IAB-node 24 may consider this cell as a candidate. The information element cellReservedForIABUse being "true" may also means that the cell supports the IAB relaying functionality and thus the field cellIABSupport may not be present (absent or omitted). If cellReservedForIABUse is "false" or not present, then the UE 30 may consider the cell as a candidate while the MT of the IAB-node may further examine cellIABSupport and consider the cell as a candidate only when cellIABSupport = "supported", otherwise it may treat the cell as if it is barred.

Subject to the more detailed description provided above, the acts of Fig. 12 for the parent node 22 of Fig. 10 are executed for the parent node 22 of this sub-embodiment 2-3 , and likewise the acts of Fig. 13 for the wireless terminal(s) of Fig. 10 are applicable and executed for the wireless terminal(s) of the this sub-embodiment 2-3, it being understood that the barring and/or candidacy of the wireless terminal may be determined for IAB-relay node 24 with reference to cellReservedForIABUse and cellIABSupport of the sub-embodiment 2-3.

Thus, in an example configuration for the sub-embodiment 2-3, the barring modes (1) to (4) of Table 7 may be achieved in the example manner of Table 13.

| *TABLE 13: CELL BARRING MODES: THIRD EXAMPLE IMPLEMENTATION* |
|---|
| Barring mode *1: cellBarred =* notBarred, *cellIReservedForIABUse* = not present, *cellIABSupport =* supported |
| Barring mode 2: *cellBarred =* notBarred, *cellIReservedForIABUse* = not present, *cellIABSupport* = notSupported |
| Barring mode 3: *cellBarred =* notBarred, *cellIReservedForIABUse* = true, *cellIABSupport* = supported (optionally present) |
| Barring mode 4: *cellBarred =* Barred |

### Embodiment 3

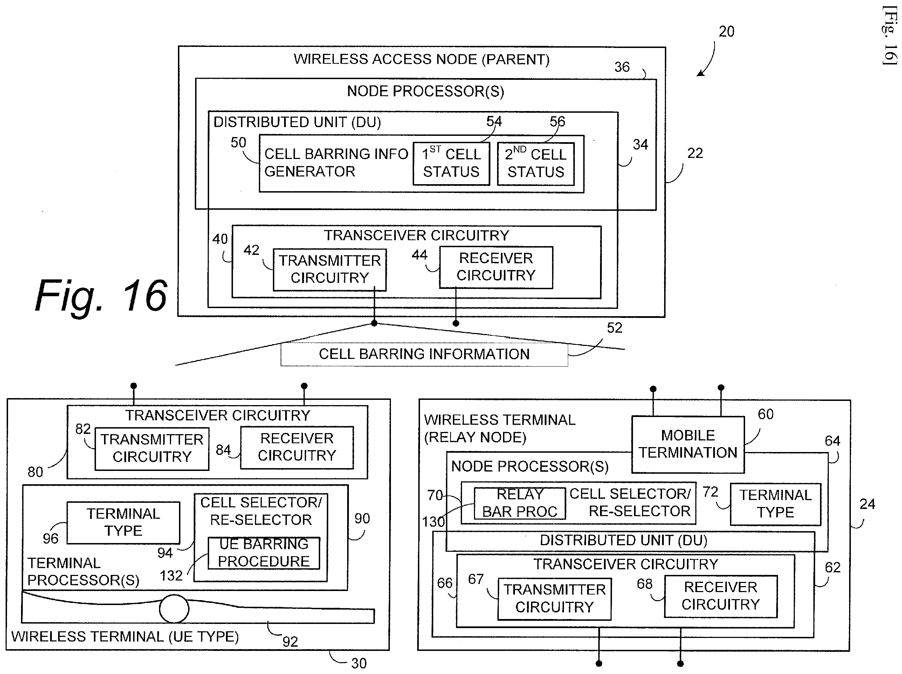

Fig. 16 shows an example wireless relay network 20 including parent node 22, IAB-relay node 24, and user equipment 30 as shown in Fig. 8 and Fig. 10. Elements and functionalities of the nodes and terminals of Fig. 16 are essentially the same as those of Fig. 8 and Fig. 10 unless otherwise specified or otherwise clear from the context. In the example embodiment and mode of Fig. 16, unlike the example embodiment and mode of Fig. 9, the IAB-relay node 24 and the user equipment 30 perform different cell barring procedures, or perform an essentially same cell barring procedure in a different manner for at least some different effect.

For example, in embodiment 3 and the system of Fig. 16, the relay node mobile termination unit 60 of an IAB-node 24 may perform the procedure for a "barred" cell in a manner distinct from a UE performing the procedure for a "barred" cell. To this end, Fig. 16 shows relay node mobile termination unit 60 of IAB-relay node 24, which may include relay node processor(s) 64 and cell selector/re-selector 70, as performing relay barring procedure 130 which may bar the IAB-relay node 24 from the cell, while the cell selector/re-selector 94 of user equipment 30 performs a different cell barring procedure, e.g., UE barring procedure 132, which may bar the user equipment 30 from the cell. As used herein, a "different" cell barring procedure may be the same cell barring procedure but implemented differently at different types of wireless terminals. For example, Listing 1 of Table 5 specifies that the UE 30 shall exclude the barred cell as a candidate for cell selection/reselection for 300 seconds. While this may still apply to UEs 30 in executing the UE barring procedure 132, the relay node mobile termination unit 60 of the IAB-node 24 may use a different time duration (other than 300 seconds) for the exclusion of the barred cell as a candidate when executing the relay barring procedure 130. The different time duration may be shorter or longer than 300 seconds, or may be infinity (permanently barred). The different time duration may be pre-configured, configured by network via dedicated signaling or configured by broadcast via system information (MIB, SIB1 or other SIB(s)). Other examples may include treating the cell as if intraFreqReselection = allowed (or not allowed) regardless of its value in MIB.

Features of this Embodiment 3 may be combined with features of other example embodiments and modes described herein. For example, the operation and mode of embodiment 3 may be applied to Embodiment 2-1, Embodiment 2-2, and/or Embodiment 2-3.

### Embodiment 4

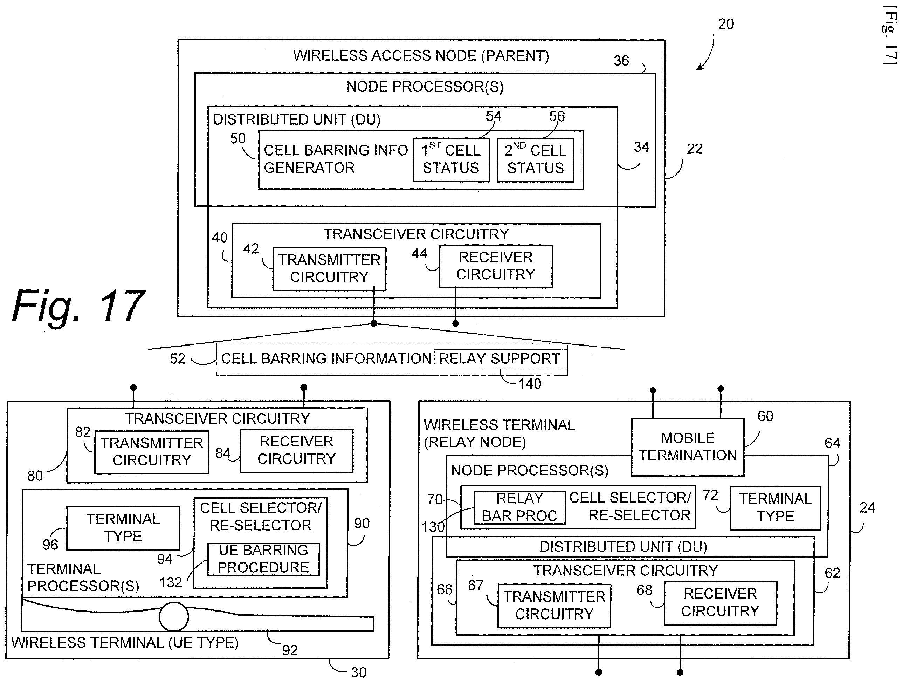

Fig. 17 shows an example wireless relay network 20 including parent node 22, IAB-relay node 24, and user equipment 30 as shown in Fig. 8 and Fig. 10. Elements and functionalities of the nodes and terminals of Fig. 16 are essentially the same as those of the figures of previously described example embodiments and modes unless otherwise specified or otherwise clear from the context. In the example embodiment and mode of Fig. 17, the cell barring information may include a field indicating whether the cell is currently supporting relaying functionality required by a wireless terminal. For example, Fig. 17 shows the cell barring information 52 comprises relay support field or information element 140. The relay support field 140 may be generated by the cell barring information generator 50 as is other cell barring information.

In embodiment and Fig. 17, the parent IAB node 22 may broadcast information, in addition to the fields previously disclosed in the previous example embodiments and modes, to indicate IAB service availability information. In some configurations, the IAB service availability information may reflect the parent node's connectivity to an IAB-donor through one or more wireless backhaul links, and thus may vary temporarily. As one exemplary implementation, the system information (in MIB, SIB1, or other SIB(s)) may include the field or information element cellServiceAvailable shown and describedin Table 14

| | |
|---|---|
| *TABLE 14:* | *cellServiceAvailable INFORMATION ELEMENT* |
| *cellServiceAvailable* | ENUMERATED {available, notAvailable}, |

If the field cellServiceAvailable indicates that the IAB service is available, the UE 30 or the relay node mobile termination unit 60 of an IAB-node 24 may follow one or some of the previously disclosed embodiments. If the field cellServiceAvailable indicates the IAB service is not available, in one configuration the UE 30 or the relay node mobile termination unit 60 of an IAB-node 24 may treat this cell as if it is barred. In this case, similar to the operation and mode disclosed in Embodiment 2-3, the UE 30 or the relay node mobile termination unit 60 of the IAB-node 24 may apply a different time duration for barring (typically a shorter duration). In another configuration, if the IAB service is not available, the UE 30 or the relay node mobile termination unit 60 of the IAB-node IAB-relay node 24 may consider this cell as a candidate with a lower priority and may camp on this cell only when it is not able to find other higher priority cells.

Thus, in Embodiment 4, the cell barring information may comprise first status, second status and third status. The first status may represent cell barring status commonly applied to the wireless terminal of any terminal type, such as the information element cellBarred. The second status may indicate whether or not the cell is reserved for the wireless terminal of the terminal type being a relay node, such as (for one example) cellBarredIAB or cellIABSupport. The third status may indicate whether the cell supports relaying functionality required by the wireless terminal of the terminal type being a relay node, e.g., cellServiceAvailable which herein is also known as relay support field 140.

### Embodiment 5

In some wireless relay networks a node serving a cell may notify terminals camping on the cell upon a change in the content of the system information in the cell (available on BCCH). This act is also referred as system information change notification. For example, as specified in 3GPP TS 36.331, in the LTE radio access network utilizes Paging Message for the notification. As another example, as specified in 3GPP TS 38.331, the 5G radio access network broadcasts Short Message on Physical Downlink Control Channel (PDCCH). The Short Message of 3GPP TS 38.331 is formatted as shown in Table 15

**TABLE 15: 3GPP TS 38.331 Short messages on PDCCH**

| **Bit** | **Short message** |
|---|---|
| 1 | ***systemInfoModification*** |
| | If set to 1: indication of a BCCH modification other than SIB6, SIB7 and SIBS. |
| 2 | ***etwsAndCmasIndication*** |
| | If set to 1: indication of an ETWS primary notification and/or an ETWS secondary notification and/or a CMAS notification. |
| 3 - [8] | Not used in this release of the specification, and shall be ignored by UE if received. |

As explained above, in some configurations of the IAB-based relay network, the system information may comprise fields, parameters, information elements and/or SIBs dedicated for IAB-nodes. "Dedicated" to IAB-nodes means not used by UEs 30, e.g., by UE-type wireless terminals). The fields, cellBarredIAB, cellIABSupport, cel-lIReservedForIABUse or cellServiceAvailable, disclosed in the aforementioned embodiments respectively indicate information regarding cell barring, cell reservation, IAB support, and IAB service availability, and are examples of such fields that are dedicated for IAB nodes and which may be included in transmitted system information. If the node serving the cell were to broadcast the system information change notification due to a change made on such a field to all wireless terminals in the cell, it would result in unnecessary system information acquisition by UE-type terminals 30 since the operation of UE-type terminals 30 is essentially impervious to such fields.

Accordingly, embodiment 5 includes several sub-embodiments of wireless relay networks 20 in which transmission of system information change notifications are governed in accordance with pertinence to IAB-node information, e.g., whether and to what extent the system information change involves a system information dedicated to IAB-type nodes. It should be understood that the operation and mode disclosed in the sub-embodiments of embodiment 5 may be applicable not only to the case where Short Message is used for broadcasting system information change notifications, but also to the case where Paging Message, or any other message is used.

### Embodiment 5-1

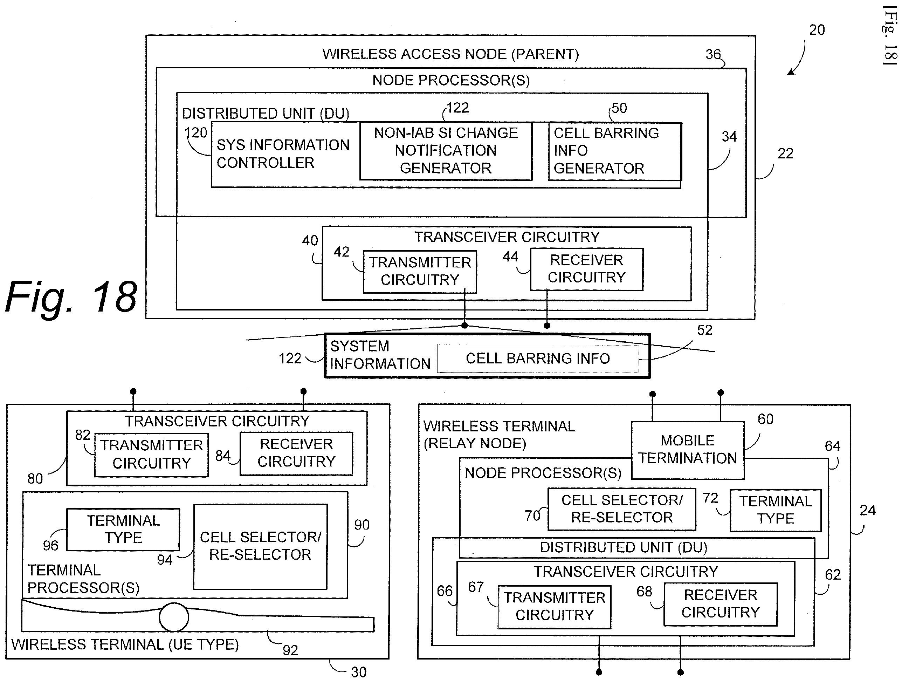

Fig. 18 shows another example wireless relay network 20 including parent node 22, IAB-relay node 24, and user equipment 30 as shown in Fig. 8 and Fig. 10, for example. Elements and functionalities of the nodes and terminals of Fig. 18 are essentially the same as those of the figures of previously described example embodiments and modes unless otherwise specified or otherwise clear from the context.

In Embodiment 5-1, a change made on the fields, parameters, information elements and/or SIBs dedicated for IAB-nodes may not result in system information change notification. For instance, upon changing the value of cellBarredIABI, cellIABSupport, cellIReservedForIABUse or cellServiceAvailable, the node serving the cell may suppress, e.g., not transmitting, broadcast of the Short Message. In this regard, for the example wireless relay network 20 of Fig. 18 the system information controller 120 of parent node 22 further includes or works in conjunction with a system information change notification generator 122. When the system information controller 120 determines that the system information to be broadcast from parent node 22 is to be changed, the system information controller 120 generally causes system information change notification generator 122 to generate a system information change notification to alert or inform wireless terminals in the cell served by parent node 22 of the impending or actual change. The system information change notification typically takes the form of an indication other than system information, such as a message or indication on a control channel, such as PDCCH, for example. However, in Embodiment 5-1, if the detected change in system information involves IAB-node dedicated system information, the system information controller 120 overrules or negates any generation of a system information change notification by system information change notification generator 122, or overrules or negates transmission of any system information change notification generated by system information change notification generator 122. Therefore, the system information change notification generator 122 is shown as being a non-IAB system information change notification generator 122, since only system information change notifications which do not involve IAB-node specific system information changes may be transmitted by parent node 22.

Although not shown as such, the system information controller 120 may also include the first cell status information 54 and second cell status information 56 as shown, for example, in Fig. 8 and Fig. 10.

Thus, the transmitter circuitry 42 of parent node 22 of Embodiment 5-1 and Fig. 18 is configured to transmit, to the wireless terminal, system information and a notification message, the notification message indicating that a change is made on the content of the system information. However, in a case that the system information comprises information dedicated to the wireless terminal of the terminal type being a relay node and a change is made on the information dedicated to the wireless terminal of the terminal type being a relay node, the change does not result in the transmitter circuitry transmitting the notification message.

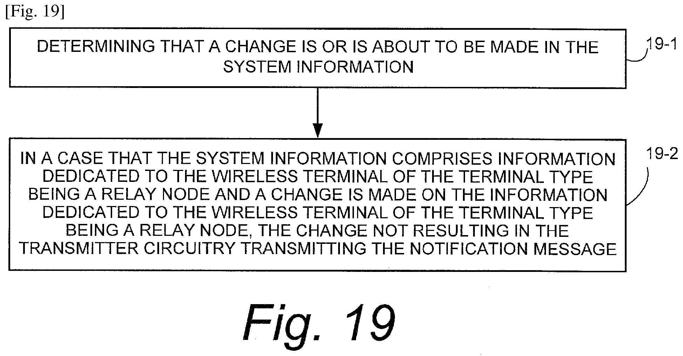

Fig. 19 illustrates example, representative acts or steps performed by the parent node 22 of Fig. 18 for example Embodiment 5-1. Act 19-1 comprises the system information controller 120 determining that a change is or is about to be made in the system information transmitted from the parent node 22. Act 19-2 comprises, in a case that the system information comprises information dedicated to the wireless terminal of the terminal type being a relay node and a change is made on the information dedicated to the wireless terminal of the terminal type being a relay node, the change not resulting in the transmitter circuitry transmitting the notification message.

### Embodiment 5-2

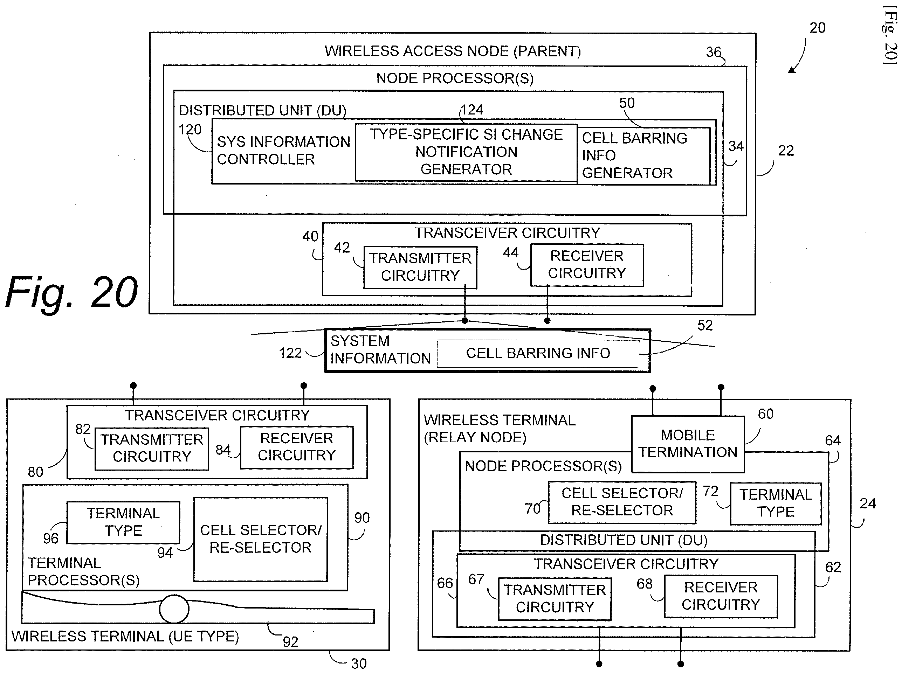

Fig. 20 shows another example wireless relay network 20 including parent node 22, IAB-relay node 24, and user equipment 30 as shown in Fig. 8 and Fig. 10, for example. Elements and functionalities of the nodes and terminals of Fig. 20 are essentially the same as those of the figures of previously described example embodiments and modes unless otherwise specified or otherwise clear from the context.

In example Embodiment 5-2 and Fig. 20, either alternatively, or additionally, a designated information element in the notification may be used to notify a change in the system information relevant to a specific type of terminal. For this purpose, the system information controller 120 of Fig. 20 is shown as comprising type-specific system information change notification generator 124. For example, in example embodiment5-2 and the system of Fig. 20, one or more bits in the Short Message disclosed in Table 15 may indicate a change on the system information relevant only to the relay node mobile termination unit 60 of an IAB-node 24. Table 16 shows an example implementation of such type-specific system information change notification.

**TABLE 16: Short messages with Type-Specific SI Change Notification**

| **Bit** | **Short message** |
|---|---|
| 1 | ***systemInfoModification*** |
| | If set to 1: indication of a BCCH modification other than SIB6, SIB7 and SIB8. |
| 2 | ***etwsAndCmasIndication*** |
| | If set to 1: indication of an ETWS primary notification and/or an ETWS secondary notification and/or a CMAS notification. |
| 3 | ***systemInfoModificationForIAB*** |
| | If set to 1: indication of a BCCH modification relevant to MT of IAB nodes. |
| 4 - [8] | Not used in this release of the specification, and shall be ignored by UE if received. |

Thus, the example embodiment 5-2 and Fig. 20 encompasses an access node which comprises transmitter circuitry configured to transmit, to the wireless terminal, system information and a notification message, wherein the notification message indicates a change is made on the content of the system information. In a case that the system information comprises information dedicated to the wireless terminal of the terminal type being a relay node, the notification message is further used to indicate whether or not a change is made on the information dedicated to the wireless terminal of the terminal type being a relay node. Such an indication may be provided by bit 3 of the short message of Table 16, for example.

For the example embodiment 5-2, both user equipment 30 and IAB-relay node 24 receive the short message of Table 16, e.g., in a physical downlink control channel (PDCCH) message. The user equipment 30, which is not concerned with changes in system information that affect only IAB wireless terminals, e.g., not concerned with IAB-dedicated system information, need only look at bit 1 and bit 2 in order to ascertain whether the system information change notification affects the user equipment 30. Thus, for the example embodiment 5-2 the system information may comprise one or more first system information blocks (SIBs) and the notification message may comprise one or more first bits, such as bit 1 and bit 2 of Table 16. Each of such first bits may be associated with a first SIB or a group of first SIBs, and each of the first bits may indicate whether or not a change is made on the associated first SIB(s).

An IAB-relay node 24, on the other hand, should look at least at bit 3 of the short message of Table 16 in order to determine if the system information change notification is relevant for IAB-relay node type wireless terminals. In other words, when the information dedicated to the wireless terminal of the terminal type being a relay node comprises one or more information elements included in one or more first SIBs, the notification message may further comprises at least one second bit, such as bit 3 of Table 16, which indicates that a change is made on the one or more information elements included in one or more first SIBs.

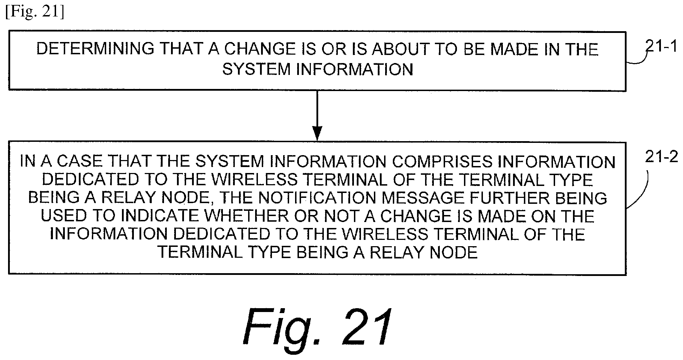

Fig. 21 illustrates example, representative acts or steps performed by the parent node 22 of Fig. 20 for example Embodiment 5-2. Act 21-1 comprises the system information controller 120 determining that a change is or is about to be made in the system information transmitted from the parent node 22. Act 20-2 comprises, in a case that the system information comprises information dedicated to the wireless terminal of the terminal type being a relay node, the notification message further being used to indicate whether or not a change is made on the information dedicated to the wireless terminal of the terminal type being a relay node.

In one example implementation or configuration of embodiment 5-2 and Fig. 20, at least one bit in the Short Message, e.g. bit 3 of Table 16, may indicate changes on specific IAB-related fields, parameters and/or information elements included in one or more SIBs. Such specific IAB-related fields, parameters and/or information elements may include, for example, the aforementioned fields cellBarredIAB, cellIABSupport, cellIReservedForIABUse or cellServiceAvailable. The specific IAB-related fields, parameters and/or information elements included in one or more SIBs that are affected by or involved in a system information change notified by bit 3 may be pre-defined or pre-configured. For example, it may be pre-defined in the wireless terminal that bit 3 indicating a change in system information means a change in a particular one of the above-mentioned IAB-related fields.

In another implementation or configuration of embodiment 5-2 and Fig. 20, one or more SIBs may be dedicated for IAB. IAB-dedicated SIBs may herein be known as "second SIBs", which are in contrast to "first SIB(s)" which are not dedicated to IAB. In such example implementation, one or more bits of the short message of Table 16 may indicate changes on the content of such IAB-dedicated SIBs. In an example implementation, various bits of the short message of Table 16 may be associated with one or more SIBs dedicated for IAB, indicating a change on the associated SIBs. For example, a new such as bit 4 may indicate that a first group of one or more IAB-dedicated SIBs are affected by a system information change; another new bit such as bit 5 may indicate that a second group of one or more IAB-dedicated SIBs are affected by a system information change; and so forth. The particular IAB-dedicated SIBs comprising each such group or associated with each bit of the short message of Table 16 may be pre-configured at the IAB-relay node 24 or configured by the network.

Thus, it should be understood that the system information comprises one or more second SIBs dedicated to the wireless terminal of the terminal type being a relay node including at least a part of the information dedicated to the wireless terminal of the terminal type being a relay node, and the notification message may comprise one or more third bits, each of the third bits being associated with the one or more second SIBs dedicated to the wireless terminal of the terminal type being a relay node, each of the third bits indicating whether or not a change is made on the associated second SIBs.

Again, although not shown as such, the system information controller 120 may also include the first cell status information 54 and second cell status information 56 as shown, for example, in Fig. 8 and Fig. 10.

### Embodiment 5-3

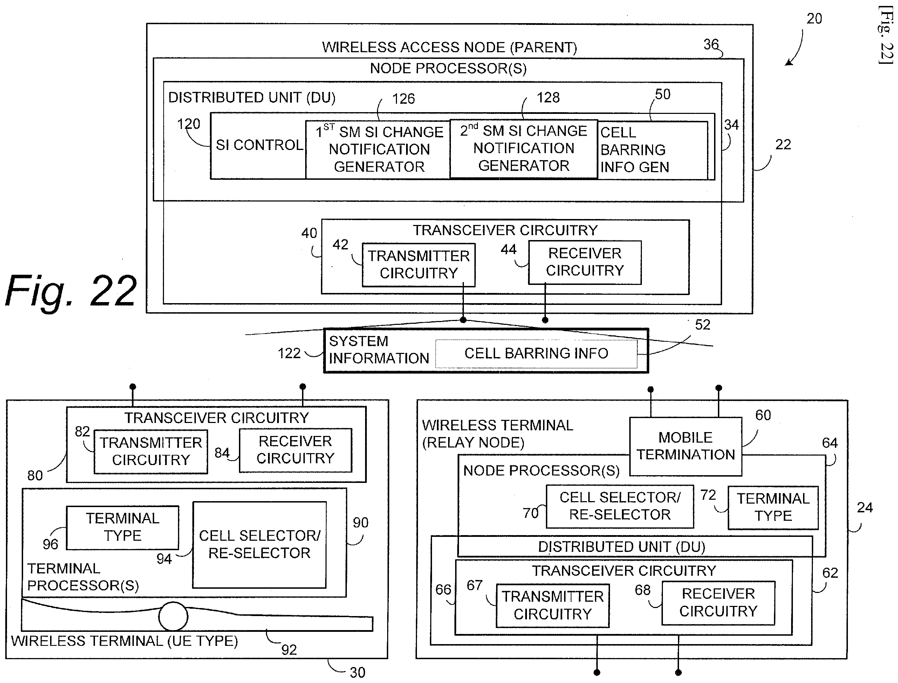

Fig. 22 shows another example wireless relay network 20 including parent node 22, IAB-relay node 24, and user equipment 30 as shown in Fig. 8 and Fig. 10, for example. Elements and functionalities of the nodes and terminals of Fig. 22 are essentially the same as those of the figures of previously described example embodiments and modes unless otherwise specified or otherwise clear from the context.

In example Embodiment 5-3 and Fig. 22, additionally, or alternatively, the notification of a change on the IAB-related fields, parameters, information elements and/or the SIBs dedicated for IAB may be carried in a second notification message transmitted separately (independently) from the aforementioned notification message, e.g., in addition to the Short Message of Table 16. The Short Message of Table 16 may now be referred to as a "first notification message". The wireless relay network 20 of Fig. 22 shows system information controller 120 as thus comprising a first short message (SM) system information change notification generator 126 and a second short message (SM) system information change notification generator 128. The second short message system information change notification generated by second short message system information change notification generator 128 may be transmitted on one or more of the downlink physical channels, which may be in the same or in a different physical channel that the first notification message (generated by first short message system information change notification generator 126) may use.

In one example configuration or implementation, the second notification message generated by second short message system information change notification generator 128 may be received by the relay node mobile termination unit 60 of the IAB-node 24 and may be ignored by the UE 30.

In some example configurations or implementations, the first notification massage generated by first short message system information change notification generator 126 may be used to notify a change made on information (fields, parameters, information elements and/or SIBs) in the system information common for UEs and IAB-nodes, whereas the second notification message generated by second short message system information change notification generator 128 may be used to notify a change made on information in the system information dedicated to IAB-nodes. Upon receiving the first notification message, the UE or the relay node mobile termination unit 60 of the IAB-node 24 may attempt to reacquire the affected (changed) SIBs indicated by the first notification message. Meanwhile, only the relay node mobile termination unit 60 of the IAB-node 24 may receive the second notification message and may attempt to reacquire the affected (changed) SIBs indicated by the second notification message.

It should thus be understood that the parent node 22 of Fig. 22 comprises a transmitter circuitry configured to transmit, to the wireless terminal, system information and a system information change notification. The system information comprises first information and second information, the first information being used for the wireless terminal of any terminal type, the second information being dedicated to the wireless terminal of the terminal type being a relay node. Further, in the example embodiment 5-3 and system of Fig. 22 the system information change notification comprises a first notification message and a second notification message. The first notification message is used to indicate a change made on the first information; the second notification message is used to indicate a change made on the second information.

Both the user equipment 30 and IAB-relay node 24 of the example embodiment 5-3 and of Fig. 22 comprise receiver circuitry configured to receive, from an access node, system information and a system information change notification. The receiver circuitry of IAB-relay node 24 may comprise relay node mobile termination unit 60; the receiver circuitry of user equipment 30 may comprise terminal receiver circuitry 84. The system information comprises first information and second information. The first information is used for the wireless terminal of any terminal type; the second information is dedicated to the wireless terminal of the terminal type being a relay node. A system information change notification received by the receiver circuitry may comprise a first notification message, which was generated by first short message system information change notification generator 126, or a second notification message, which was generated by second short message system information change notification generator 128. The first notification message is used to indicate a change made on the first information; the second notification message is used to indicate a change made on the second information. The processor of the receiving wireless terminal, the terminal processor(s) 90 of user equipment 30 or the relay node processor(s) 64 of IAB-relay node 24, may then use the respective first short message system information change notification or the second short message system information change notification to prepare for reception of the system information which includes the changed system information to which the wireless terminal was alerted by the respective system information change notification message, and then to receive the changed system information.

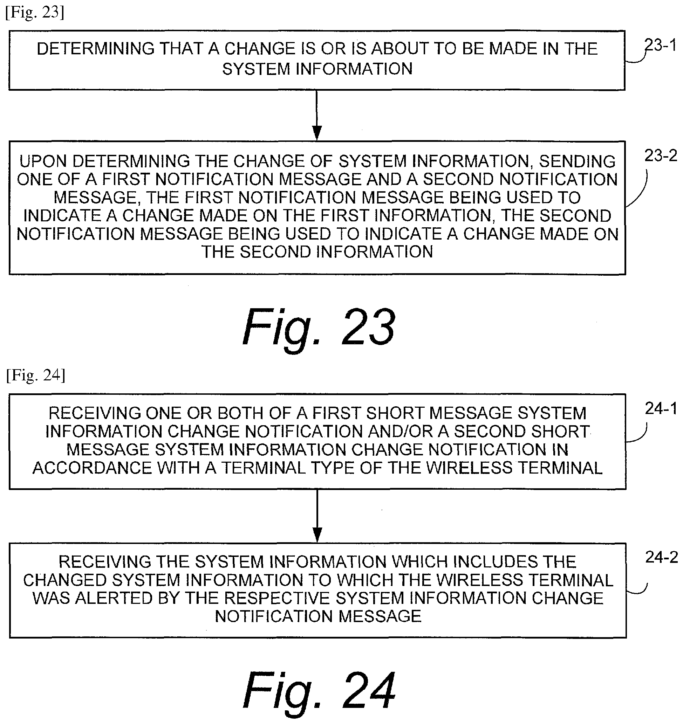

Fig. 23 illustrates example, representative acts or steps performed by the parent node 22 of Fig. 22 for example Embodiment 5-3. As understood from the foregoing, the parent node 22 of Fig. 22 is capable of generating system information and a system information change notification. The system information comprising first information and second information, the first information being used for the wireless terminal of any terminal type, the second information being dedicated to the wireless terminal of the terminal type being a relay node. Act 23-1 comprises the system information controller 120 determining that a change is or is about to be made in the system information transmitted from the parent node 22. Act 23-2 comprises, upon determining the change of system information, sending one of a first notification message and a second notification message, the first notification message being used to indicate a change made on the first information, the second notification message being used to indicate a change made on the second information.

Fig. 24 illustrates example, representative acts or steps performed by a wireless terminal, e.g., either user equipment 30 or IAB-relay node 24, of Fig. 24 for example Embodiment 5-3. Act 24-1 comprises receiving one or both of a first short message system information change notification and/or a second short message system information change notification in accordance with a terminal type of the wireless terminal. A user equipment 30 type wireless terminal may receive only a first short message system information change notification (generated by first short message system information change notification generator 126 of parent node 22); whereas a IAB-relay node 24 may receive either the first short message system information change notification (generated by first short message system information change notification generator 126) or a second short message system information change notification (generated by second short message system information change notification generator 128). Act 24-2 comprises receiving the system information which includes the changed system information to which the wireless terminal was alerted by the respective system information change notification message.

Again, although not shown as such, the system information controller 120 may also include the first cell status information 54 and second cell status information 56 as shown, for example, in Fig. 8 and Fig. 10.

Non-exclusive advantages and features of the technology disclosed herein thus include or encompass the following:
- The system information may provide two cell barring configurations, one specific to UEs and the other specific to IAB-nodes.
- The system information may also provide IAB service availability information.
- The UE/IAB-node may determine if the cell is a candidate for cell selection/reselection based on the configurations and the information.
- The relay network may provide a system information change notification targeted for IAB-nodes.

As is understood by those skilled in the art, in some telecommunications system messages, signals, and/or data are communicated over a radio or air interface using one or more "resources", e.g., "radio resource(s)". Each node or terminal described herein may comprise an unillustrated frame/message generator/handler which serves to handle messages, signals, and data received from other nodes, including but not limited to the cell barring information message 62 and system information change notification described herein.

Certain units and functionalities of the systems 20 may be implemented by electronic machinery. For example, electronic machinery may refer to the processor circuitry described herein, such as node processor(s) 36, relay node processor(s) 64, and terminal processor(s) 90. Moreover, the term "processor circuitry" is not limited to mean one processor, but may include plural processors, with the plural processors operating at one or more sites. Moreover, as used herein the term "server" is not confined to one server unit, but may encompasses plural servers and/or other electronic equipment, and may be co-located at one site or distributed to different sites. With these understandings, Fig. 25 shows an example of electronic machinery, e.g., processor circuitry, as comprising one or more processors 290, program instruction memory 292; other memory 294 (e.g., RAM, cache, etc.); input/output interfaces 296 and 297, peripheral interfaces 298; support circuits 299; and busses 300 for communication between the aforementioned units. The processor(s) 290 may comprise the processor circuitries described herein, for example, node processor(s) 36, relay node processor(s) 64, and node processor(s) 90.

An memory or register described herein may be depicted by memory 294, or any computer-readable medium, may be one or more of readily available memory such as random access memory (RAM), read only memory (ROM), floppy disk, hard disk, flash memory or any other form of digital storage, local or remote, and is preferably of non-volatile nature, as and such may comprise memory. The support circuits 299 are coupled to the processors 290 for supporting the processor in a conventional manner. These circuits include cache, power supplies, clock circuits, input/output circuitry and subsystems, and the like.

Although the processes and methods of the disclosed embodiments may be discussed as being implemented as a software routine, some of the method steps that are disclosed therein may be performed in hardware as well as by a processor running software. As such, the embodiments may be implemented in software as executed upon a computer system, in hardware as an application specific integrated circuit or other type of hardware implementation, or a combination of software and hardware. The software routines of the disclosed embodiments are capable of being executed on any computer operating system, and is capable of being performed using any CPU architecture.

The functions of the various elements including functional blocks, including but not limited to those labeled or described as "computer", "processor" or "controller", may be provided through the use of hardware such as circuit hardware and/or hardware capable of executing software in the form of coded instructions stored on computer readable medium. Thus, such functions and illustrated functional blocks are to be understood as being either hardware-implemented and/or computer-implemented, and thus machine-implemented.

In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) [ASIC], and/or field programmable gate array(s) (FPGA(s)), and (where appropriate) state machines capable of performing such functions.

In terms of computer implementation, a computer is generally understood to comprise one or more processors or one or more controllers, and the terms computer and processor and controller may be employed interchangeably herein. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" may also be construed to refer to other hardware capable of performing such functions and/or executing software, such as the example hardware recited above.

Nodes that communicate using the air interface also have suitable radio communications circuitry. Moreover, the technology disclosed herein may additionally be considered to be embodied entirely within any form of computer-readable memory, such as solid-state memory, magnetic disk, or optical disk containing an appropriate set of computer instructions that would cause a processor to carry out the techniques described herein.

Moreover, each functional block or various features of the wireless terminal 30, parent node 22, and IAB-relay node 24 used in each of the aforementioned embodiments may be implemented or executed by circuitry, which is typically an integrated circuit or a plurality of integrated circuits. The circuitry designed to execute the functions described in the present specification may comprise a general-purpose processor, a digital signal processor (DSP), an application specific or general application integrated circuit (ASIC), a field programmable gate array (FPGA), or other programmable logic devices, discrete gates or transistor logic, or a discrete hardware component, or a combination thereof. The general-purpose processor may be a microprocessor, or alternatively, the processor may be a conventional processor, a controller, a microcontroller or a state machine. The general-purpose processor or each circuit described above may be configured by a digital circuit or may be configured by an analogue circuit. Further, when a technology of making into an integrated circuit superseding integrated circuits at the present time appears due to advancement of a semiconductor technology, the integrated circuit by this technology is also able to be used.

It will be appreciated that the technology disclosed herein is directed to solving radio communications-centric issues and is necessarily rooted in computer technology and overcomes problems specifically arising in radio communications. Moreover, the technology disclosed herein improves basic function of a radio access network, e.g., methods and procedures to deal with problematic issues such as governing or controlling which cells may be selected or re-selected by various types of nodes and terminals, in order to operate a wireless relay network 20 effectively and to reduce congestion in such operation.

One or more of the following documents may be pertinent to the technology disclosed herein:
3GPP RAN2 #104 Contributions:
R2-1816509 Selection of Parent for IAB-Node vivo
R2-1816561 IAB node selection and reselection in RRC IDLE Ericsson
R2-1816562 LAB node relocation Ericsson
R2-1816564 Minimumizing CN functionalities for IAB network Ericsson
R2-1816567 Network slicing in IAB networks Ericsson
R2-1816579 Suspension of Transmission upon Failure of Backhaul links Ericsson
R2-1816580 Setup Procedure for the Adaptation Layer of an IAB Network Ericsson
R2-1817073 Route management in IAB Sony
R2-1817074 Open issues related to JAB power on procedure Sony
R2-1817169 Parent node selection for IAB access Lenovo, Motorola Mobility R2-1817170 RLF in backhaul link Lenovo, Motorola Mobility
R2-1817271 Topology Management for Spanning Tree topologies Nokia, Nokia Shanghai Bell
R2-1817411 Discussion on backhaul bearer setup in JAB network ZTE Corporation
R2-1817418 Discussion on IAB node discovery and selection ZTE Corporation
R2-1817419 Consideration on Routing in IAB ZTE Corporation
R2-1817520 Topology in IAB system Lenovo, Motorola Mobility
R2-1817543 Which cell/IAB node support child IAB access Lenovo, Motorola Mobility
R2-1817573 Consideration of RLF recovery in JAB Kyocera
R2-1817616 Discovery and measurements for IAB Nokia, Nokia Shanghai Bell
R2-1817699 Route Adaptation Upon Backhaul Failure Intel Corporation
R2-1817716 Text proposal for Route Adaptation Upon Backhaul Failure Intel Corporation
R2-1817775 Route selection method for architecture 1 a Huawei Technologies France
R2-1817836 CP signalling transmission in IAB NSAFuturewei Technologies
R2-1817906 IAB bearer mapping decisions Huawei Technologies France
R2-1817931 QoS parameters for IAB QoS handling Huawei Technologies France
R2-1817990 Service Interruption Minimization during Topology Adaptation ITRI
R2-1818231 Consideration on backhaul link enhancement for IAB LG Electronics France
R2-1818292 Discussion on cell reselection of IAB nodes LG Electronics Inc.
R2-1818336 Support of Multiple connectivity for IAB nodes Futurewei Technologies
R2-1818367 Handling of the RLF on wireless backhaul link LG Electronics Inc.
R2-1818377 IAB routing and topology management for Architecture la Nokia, Nokia Shanghai Bell
R2-1818415 Access Control for IAB node LG Electronics Inc.
R2-1818745 TP QoS parameters for IAB QoS handling Huawei Technologies France
R2-1818746 Route Adaptation Upon Backhaul Failure Intel Corporation
R2-1818764 TP QoS parameters for IAB QoS handling Huawei Technologies France
R2-1818765 Route Adaptation Upon Backhaul Failure Intel Corporation
R2-1818790 TP on QoS parameters for IAB QoS handling Huawei Technologies France

Although the description above contains many specificities, these should not be construed as limiting the scope of the technology disclosed herein but as merely providing illustrations of some of the presently preferred embodiments of the technology disclosed herein. Therefore, it will be appreciated that the scope of the technology disclosed herein fully encompasses other embodiments which may become obvious to those skilled in the art, and that the scope of the technology disclosed herein is accordingly to be limited by nothing other than the appended claims, in which reference to an element in the singular is not intended to mean "one and only one" unless explicitly so stated, but rather "one or more." The above-described embodiments could be combined with one another.

## Claims

1. A wireless access node (22) of a radio access network, RAN (20), the wireless access node serving a cell, the wireless access node comprising:
a processor unit (36) configured to generate a first indication indicating whether or not the cell is barred, and
a transmitter unit (42) configured to transmit, to an IAB node (24), a master information block, MIB, comprising the first indication;
**characterized in that**
the processor unit (36) is further configured to generate a second indication indicating whether or not the cell is considered as a candidate for a cell (re)selection for the Integrated Access and Backhaul, IAB, node (24); and
the transmitter unit (42) is further configured to transmit, to the IAB node (24), a system information block, SIB, comprising the second indication; wherein
the first indication is applicable to user equipment and not to the IAB node, and the second indication is applicable to the IAB node and not to user equipment.

2. An Integrated Access and Backhaul, IAB, node (24) of a radio access network, RAN (20), the IAB node comprising:
a receiver unit (68) configured to receive, from a cell served by a wireless access node (22), a master information block, MIB, comprising a first indication indicating whether or not the cell is barred,
**characterized in**
the receiver unit (68) being further configured to receive, from the cell served by a wireless access node (22), a system information block, SIB, comprising a second indication indicating whether or not the cell is considered as a candidate for a cell (re)selection for the IAB node, and
a processor unit (64) configured to determine, based on the second indication, whether or not the IAB node is allowed to camp on the cell; wherein
the first indication is ignored by the IAB node,
the first indication is applicable to user equipment and not to the IAB node, and
the second indication is applicable to the IAB node and not to user equipment.

3. The IAB node of claim 2, wherein the IAB node camps on the cell in the case that the second indication indicates that the cell is considered as a candidate for a cell (re)selection for the IAB node, regardless of the first indication.

4. A method for a wireless access node (22) of a radio access network, RAN (20), the wireless access node serving a cell, the method comprising:
generating a first indication indicating whether or not the cell is barred, and
transmitting, to an IAB node, a master information block, MIB, comprising the first indication;
**characterized in** further comprising
generating a second indication indicating whether or not the cell is considered as a candidate for a cell (re)selection for the Integrated Access and Backhaul, IAB, node (24), and
transmitting, to the IAB node, a system information block, SIB, comprising the second indication; wherein
the first indication is applicable to user equipment and not to the IAB node, and
the second indication is applicable to the IAB node and not to user equipment.

## Patentansprüche

1. Drahtloser Zugangsknoten (22) eines Funkzugangsnetzwerks, RAN (20), wobei der drahtlose Zugangsknoten eine Zelle bedient, wobei der drahtlose Zugangsknoten umfasst:
eine Prozessoreinheit (36), die konfiguriert ist, eine erste Angabe zu generieren, die angibt, ob die Zelle ausgeschlossen bzw. gesperrt ist oder nicht, und
eine Sendeeinheit (42), die konfiguriert ist, einen Master-Informationsblock, MIB, der die erste Angabe umfasst, an einen IAB-Knoten (24) zu senden;
**dadurch gekennzeichnet, dass**
die Prozessoreinheit (36) ferner konfiguriert ist, eine zweite Angabe zu generieren, die angibt, ob die Zelle als ein Kandidat für eine Zell(neu)auswahl für den integrierten Zugangs- und Backhaul,IAB,-Knoten (24) betrachtet wird oder nicht; und
die Sendeeinheit (42) ferner konfiguriert ist, einen Systeminformationsblock, SIB, der die zweite Angabe umfasst, an den IAB-Knoten (24) zu senden; wobei die erste Angabe für ein Benutzergerät und nicht für den IAB-Knoten gilt und
die zweite Angabe für den IAB-Knoten und nicht für das Benutzergerät gilt.

2. Integrierter Zugangs- und Backhaul,IAB,-Knoten (24) eines Funkzugangsnetzwerks, RAN (20), wobei der IAB-Knoten umfasst:
eine Empfängereinheit (68), die konfiguriert ist, von einer von einem drahtlosen Zugangsknoten (22) bedienten Zelle einen Master-Informationsblock, MIB, zu empfangen, der eine erste Angabe umfasst, die angibt, ob die Zelle ausgeschlossen bzw. gesperrt ist oder nicht,
**dadurch gekennzeichnet, dass**
die Empfängereinheit (68) ferner konfiguriert ist, von der von einem drahtlosen Zugangsknoten (22) bedienten Zelle einen Systeminformationsblock, SIB, zu empfangen, der eine zweite Angabe umfasst, die angibt, ob die Zelle als ein Kandidat für eine Zell(neu)auswahl für den IAB-Knoten betrachtet wird oder nicht, und
eine Prozessoreinheit (64), die konfiguriert ist, basierend auf der zweiten Angabe zu bestimmen, ob der IAB-Knoten die Zelle aufnehmen darf oder nicht; wobei
die erste Angabe von dem IAB-Knoten ignoriert wird,
die erste Angabe für ein Benutzergerät und nicht für den IAB-Knoten gilt und
die zweite Angabe für den IAB-Knoten und nicht für das Benutzergerät gilt.

3. IAB-Knoten nach Anspruch 2, wobei der IAB-Knoten die Zelle unabhängig von der ersten Angabe in dem Fall aufnimmt, dass die zweite Angabe angibt, dass die Zelle als ein Kandidat für eine Zellen(neu)auswahl für den IAB-Knoten betrachtet wird.

4. Verfahren für einen drahtlosen Zugangsknoten (22) eines Funkzugangsnetzwerks, RAN (20), wobei der drahtlose Zugangsknoten eine Zelle bedient, wobei das Verfahren umfasst:
Generieren einer ersten Angabe, die angibt, ob die Zelle ausgeschlossen bzw. gesperrt ist oder nicht, und
Senden eines Master-Informationsblocks, MIB, der die erste Angabe umfasst, an einen IAB-Knoten;
**dadurch gekennzeichnet, dass** es ferner umfasst:
Generieren einer zweiten Angabe, die angibt, ob die Zelle als ein Kandidat für eine Zellen(neu)auswahl für den integrierten Zugangs- und Backhaul,IAB,-Knoten (24) betrachtet wird oder nicht, und
Senden, an den IAB-Knoten, eines Systeminformationsblocks, SIB, der die zweite Angabe umfasst; wobei
die erste Angabe für ein Benutzergerät und nicht für den IAB-Knoten gilt und
die zweite Angabe für den IAB-Knoten und nicht für das Benutzergerät gilt.

## Revendications

1. Nœud d'accès sans fil (22) d'un réseau d'accès radio, RAN (20), le nœud d'accès sans fil servant une cellule, le nœud d'accès sans fil comprenant :
une unité de processeur (36) configurée pour générer une première indication indiquant si oui ou non la cellule est interdite, et
une unité de transmetteur (42) configurée pour transmettre, à un nœud IAB (24), un bloc d'information maître, MIB, comprenant la première indication ;
**caractérisé en ce que**
l'unité de processeur (36) est en outre configurée pour générer une deuxième indication indiquant si oui ou non la cellule est considérée comme un candidat pour une (re)sélection de cellule pour le nœud d'accès et de liaison, IAB, intégré (24) ; et
l'unité de transmetteur (42) est en outre configurée pour transmettre, au nœud IAB (24), un bloc d'information de système, SIB, comprenant la deuxième indication ; dans lequel
la première indication est applicable à un équipement d'utilisateur et non pas au nœud IAB, et
la deuxième indication est applicable au nœud IAB et non pas à l'équipement d'utilisateur.

2. Nœud d'accès et de liaison, IAB, intégré (24) d'un réseau d'accès radio, RAN (20), le nœud IAB comprenant :
une unité de réception (68) configurée pour recevoir, à partir d'une cellule servie par un nœud d'accès sans fil (22), un bloc d'information maître, MIB, comprenant une première indication indiquant si oui ou non la cellule est interdite,
**caractérisé en ce que**
l'unité de réception (68) étant en outre configurée pour recevoir, à partir de la cellule servie par un nœud d'accès sans fil (22), un bloc d'information de système, SIB, comprenant une deuxième indication indiquant si oui ou non la cellule est considérée comme un candidat pour une (re)sélection de cellule pour le nœud IAB, et
une unité de processeur (46) configurée pour déterminer, sur la base de la deuxième indication, si oui ou non le nœud IAB est autorisé à camper sur la cellule ; dans lequel
le première indication est ignorée par le nœud IAB,
la première indication est applicable à un équipement d'utilisateur et non pas au nœud IAB, et
la deuxième indication est applicable au nœud IAB et non pas à l'équipement d'utilisateur.

3. Nœud IAB selon la revendication 2, dans lequel le nœud IAB campe sur la cellule dans le cas où la deuxième indication indique que la cellule est considérée comme un candidat pour une (re)sélection de cellule pour le nœud IAB, quelle que soit la première indication.

4. Procédé pour un nœud d'accès sans fil (22) d'un réseau d'accès radio, RAN (20), le nœud d'accès sans fil servant une cellule, le procédé comprenant :
la génération d'une première indication indiquant si oui ou non la cellule est interdite, et
la transmission, à un nœud IAB, d'un bloc d'information maître, MIB, comprenant la première indication ;
**caractérisé en ce qu'**il comprend en outre
la génération d'une deuxième indication indiquant si oui ou non la cellule est considérée comme un candidat pour une (re)sélection de cellule pour le nœud d'accès et de liaison, IAB, intégré (24), et
la transmission, au nœud IAB, d'un bloc d'information de système, SIB, comprenant la deuxième indication ; dans lequel
la première indication est applicable à un équipement d'utilisateur et non pas au nœud IAB, et
la deuxième indication est applicable au nœud IAB et non pas à l'équipement d'utilisateur.
